**Europäisches Patentamt**

**European Patent Office**

**Office européen des brevets**

(19)

(11) **EP 1 244 036 A1**

(12) **EUROPEAN PATENT APPLICATION**
published in accordance with Art. 158(3) EPC

(43) Date of publication:
**25.09.2002 Bulletin 2002/39**

(51) Int Cl.⁷: **G06F 17/60**

(21) Application number: **00985917.4**

(22) Date of filing: **27.12.2000**

(86) International application number:
**PCT/JP00/09280**

(87) International publication number:
**WO 01/048646 (05.07.2001 Gazette 2001/27)**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **27.12.1999 JP 37736799**

(71) Applicant: **Dentsu Inc.**
**Chuo-ku, Tokyo 104-8426 (JP)**

(72) Inventors:
• **AIHARA, Ken**
  **Kawasaki-shi Kanagawa 211-0062 (JP)**
• **HIBIKI, Norio**
  **Tokorozawa-shi, Saitama 359-0041 (JP)**

(74) Representative: **Skone James, Robert Edmund**
**GILL JENNINGS & EVERY**
**Broadgate House**
**7 Eldon Street**
**London EC2M 7LH (GB)**

(54) **TOTAL ADVERTISEMENT MANAGING SYSTEM USING ADVERTISEMENT PORTFOLIO MODEL**

(57) Provided is an advertisement portfolio model that can reduce a risk in an advertisement transaction for an individual advertisement product. Since in an advertisement portfolio model according to the present invention, firstly a relational expression to determine a comprehensive advertisement risk management index is derived, which is an index for statistically representing a maximum unexpected loss amount which the advertisement product is subject to at a certain probability during the advertising campaign period, secondarily a plurality of correlation coefficient data of the advertisement product are calculated from the observational data of the advertisement product, and thirdly an optimal combination of the advertisement products is figured out in order to analyze at least either one of an effect, an efficiency or a risk of the advertisement product based on the relational expression for determining the comprehensive advertisement risk management index and the plurality of correlation coefficient data or the observational data which has taken the correlation into account indirectly, thereby the present invention can provide a sponsor with an optimal combination of the advertisement products.

FIG. 1

EP 1 244 036 A1

## Description

FIELD OF THE INVENTION

The present invention relates to an advertisement portfolio model, a comprehensive advertisement risk management system using the advertisement portfolio model, and a method for making an investment decision by using the advertisement portfolio model.

DESCRIPTION OF THE PRIOR ART

Conventionally, a sponsor has made a decision on purchasing an actual program based on the sponsor's advertising strategy together with fundamental conditions, including: an advertising budget; a period of an advertising campaign; an advertising amount; an advertising media to be used and an advertisement product; and an advertisement material and its media pattern, plus these conditions additionally taken into consideration, which will be of decision factors particular to the sponsor, including: a selection of advertising media to be used; a match of the advertisement product with a company image or an product image; a reference value in advertising efficiency acceptable by the sponsor (a calculation from an advertising cost and a variety of survey data such as an audience rating); a reaction rate of the consumers who have come in contact with the advertising media (a collect rate of a questionnaire or a document request, an product purchase rate, and so on); and a target value in the advertising efficiency set by the sponsor based on values in survey data (a reach and frequency, a rate of attention-getting, a rate of recognition and so on) determined statistically from a variety of sample surveys.

An optimal model relating to a purchasing of the advertisement product according to the prior art has been developed so as to provide an advertising project by analyzing the individual statistical data specified to the advertising media, such as the audience rating and/or the subscription rating.

However, the optimal model relating to the purchasing of the advertisement product according to the prior art described above could not provide any advertising project tailored independently for each sponsor which may take a relationship between the advertisement product and the sponsor or evaluation parameters other than the items subject to statistical survey into an account.

Besides, the prior-art optimal model relating to the purchasing of the advertisement product has been developed to analyze a variety of statistical data by way of an ordinary sample survey such as the audience rating or the subscription rating, and due to this reason, it could not provide an evaluation measure and an evaluation criteria in the advertising efficiency specifically customized for the individual sponsor.

Further, in the prior art technology, since there has been no index to determine a risk for the purchasing of the advertisement product, it has inhibited any development in such an advertisement product that can reduce the risk in the advertisement transaction.

DISCLOSURE OF THE INVENTION

An object of the present invention, in the light of the problems associated with the prior art as described above, is to provide an advertisement portfolio model including an optimal combination of advertisement products.

The aforementioned object of the present invention may be achieved by an advertisement portfolio model, in which firstly a relational expression to determine a comprehensive advertisement risk management index is derived, which is an index for statistically representing a maximum unexpected loss amount which the advertisement product is subject to at a certain probability during the advertising campaign period, secondarily a plurality of correlation coefficient data of the advertisement product are calculated from an observational data of the advertisement product, and thirdly an optimal combination of the advertisement products is figured out in order to analyze at least either one of an effect, an efficiency or a risk of the advertisement product based on the relational expression for determining the comprehensive advertisement risk management index and the plurality of correlation coefficient data or the observational data which has taken the correlation into account indirectly.

In the advertisement portfolio model according to the present invention, the advertisement product may comprise at least two or more different advertisement products.

In the advertisement portfolio model according to the present invention, the advertisement product may be constructed to include at least one advertisement derivative product.

In the advertisement portfolio model according to the present invention, the advertisement derivative product may be constructed so as to measure a risk in an individual advertisement transaction and at the same time to reduce the risk in the individual advertisement transaction.

Further, another object of the present invention is to provide a comprehensive advertisement risk management system which allows a sponsor to make a comprehensive investment decision by using the above-described advertisement portfolio on the advertisement product owned by the sponsor.

The aforementioned object of the present invention may be achieved by a comprehensive advertisement risk management system using an optimal advertisement portfolio model to analyze at least either one of an effect, an efficiency or a risk of an advertisement product, said system comprising: an input means for entering a setting condition required to calculate the comprehensive advertisement risk management index; a model generation means for generating a plurality of advertisement portfolio models by firstly calculating a plurality of numeric values relating to the advertising effect and the advertising efficiency from the observational data in the past according to the setting condition entered by the input means, and by secondarily calculating a plurality of correlation coefficient data for a purchased advertisement product from a data of said purchased advertisement product; a verification means for comparing a plurality of those generated advertisement portfolio models to actual data during a period of the advertisement product being offered and for verifying that said plurality of advertisement portfolio models is adaptable to the real condition; and a selection means for selecting a most suitable advertisement portfolio model with respect to the risk analysis and the effect analysis of the advertisement product from the plurality of advertisement portfolio models based on the verification result by the verification means.

In the comprehensive advertisement risk management system using the advertisement portfolio model according to the present invention, the advertisement product may comprise at least two or more different advertisement products.

In the comprehensive advertisement risk management system using the advertisement portfolio model according to the present invention, the advertisement product may be constructed to include at least one advertisement derivative product.

In the comprehensive advertisement risk management system using the advertisement portfolio model according to the present invention, the advertisement derivative product may be constructed so as to measure a risk in an individual advertisement transaction and at the same time to reduce the risk in the individual advertisement transaction.

In the comprehensive advertisement risk management system using the advertisement portfolio model according to the present invention, a plurality of numeric values relating to the advertising effect and the advertising efficiency may be represented by two or more values selected from a group consisting of values relating to an audience rating, a cost per mil (CPM), a reach, a frequency and a recognition.

Further, another object of the present invention is to provide an investment decision making method which allows a sponsor to make a comprehensive investment decision on an owned advertisement product by using the above-described advertisement portfolio model.

The aforementioned object of the present invention may be achieved by an investment decision making method using the advertisement portfolio model, comprising the steps of: entering a setting condition required to calculate the comprehensive advertisement risk management index; calculating a plurality of numeric values relating to the advertising effect and the advertising efficiency from the observational data in the past according to the setting condition entered by the input means; calculating a plurality of correlation coefficient data for a purchased advertisement product from an advertisement product data of the purchased advertisement product; generating a plurality of advertisement portfolio models based on the calculation results; comparing a plurality of those generated advertisement portfolio models with actual data during a period of the purchased advertisement product being offered; verifying that the plurality of advertisement portfolio models is practically adaptable to the real condition based on the comparison result; and selecting a most suitable advertisement portfolio model with respect to the risk analysis and the effect analysis of the purchased advertisement product from the plurality of advertisement portfolio models based on the verification result.

In the investment decision making method using the advertisement portfolio model according to the present invention, the advertisement product may comprise at least two or more different advertisement products.

In the investment decision making method using the advertisement portfolio model according to the present invention, the advertisement product may be constructed to include at least one advertisement derivative product.

In the investment decision making method using the advertisement portfolio model according to the present invention, the advertisement derivative product may be constructed so as to measure a risk in an individual advertisement transaction and at the same time to reduce the risk in the individual advertisement transaction.

In the investment decision making method using the advertisement portfolio model according to the present invention, a plurality of numeric values relating to the advertising effect and the advertising efficiency may be represented by two or more values selected from a group consisting of values relating to an audience rating, a cost per mil (CPM), a reach, a frequency and a recognition.

BRIEF DESCRIPTION OF THE DRAWINGS

Fig. 1 is a block diagram illustrating a configuration of a comprehensive advertisement risk management system of an embodiment according to the present invention;

Fig. 2 is a chart illustrating an example of a verification result data by the comprehensive advertisement risk management system of Fig. 1;

Fig. 3(a) is a flow chart for illustrating a processing operation of the comprehensive advertisement risk management system of Fig. 1;

Fig. 3(b) is a flow chart for illustrating a processing operation of the comprehensive advertisement risk management system of Fig. 1;

Fig. 3(c) is a flow chart for illustrating a processing operation of the comprehensive advertisement risk management system of Fig. 1;

Fig. 4(a) shows an exemplary set of terms to be entered from a user purchasing condition input section of the comprehensive advertisement risk management system of Fig. 1;

Fig. 4(b) shows an exemplary set of terms to be entered from a user purchasing condition input section of the comprehensive advertisement risk management system of Fig. 1;

Fig. 4(c) shows an exemplary set of terms to be entered from a user purchasing condition input section of the comprehensive advertisement risk management system of Fig. 1;

Fig. 5 shows an exemplary set of terms to be entered from a user purchasing condition input section of the comprehensive advertisement risk management system of Fig. 1;

Fig. 6 is a graph illustrating AR index values and actual loss and gain amounts in time sequence for each model generated by the comprehensive advertisement risk management system of Fig. 1; and

Fig. 7 is a table of the verification result data of Fig. 2 that has been ordered and compiled, wherein the data is indicated according to the optimal advertisement portfolio model ranking.

DESCRIPTION OF THE PREFERRED EMBODIMENTS

An embodiment of the present invention will now be described below with reference to the attached drawings.

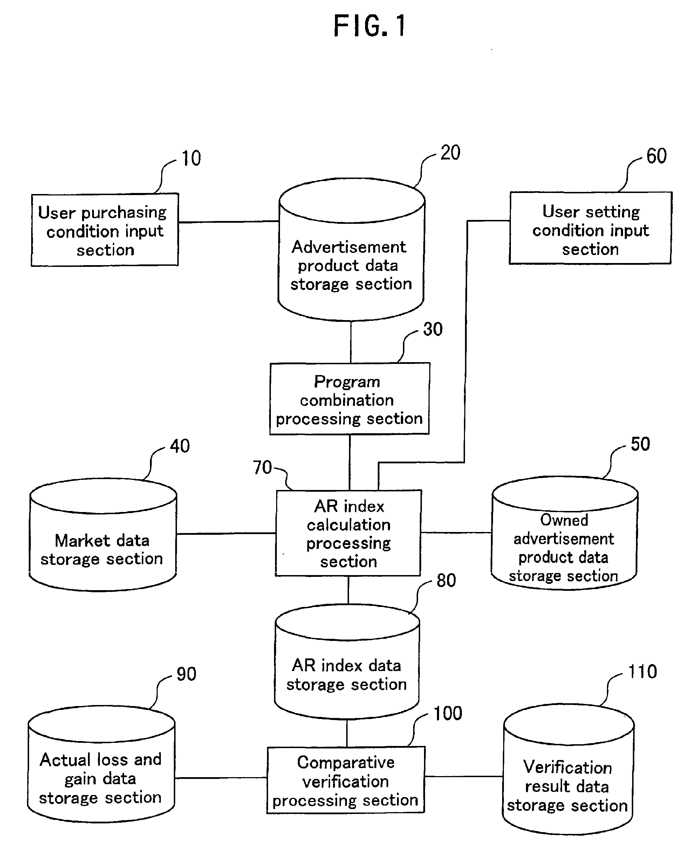

Fig. 1 is a block diagram, illustrating a schematic configuration of a comprehensive advertisement risk management system of a preferred embodiment according to the present invention.

A user purchasing condition input section 10 is constructed so that a sponsor, a purchaser of an advertisement product, can select a quantitative and qualitative evaluation measure such as an effect and/or an efficiency of the advertisement product from the setting conditions, and can input a user purchasing condition 11 indicating data which are weighted corresponding to a degree of the terms to which the sponsor wish to attach weight with respect to said selected evaluation measure.

An advertisement product data storage section 20 stores program data 21, organization data 22, sales data 23, program evaluation data 24 and advertising effect data 25. The program data 21 indicates a title of a program, a genre of the program, a content of the program, casts, a producing production and so on. The organization data 22 indicates a broadcasting date of the program, a broadcasting hour of the program and so on. The sale data 23 indicates the number of sales days (the number of actual working days), a CM broadcasting date, a CM broadcasting hour, a total CM seconds, a no CM seconds, a cosponsor list and a sales restricted business category (a competitive business category), an advertising campaign period and a sales restriction condition (unit selling by a day of week, by a belt, by a spot; 60-seconds offer only, 30-seconds offer only; or billboard display only and so on), an advertising rate per unit CM seconds, and so on. The program evaluation data 24 is an evaluation data measured on a program or a CM material, which represents rating data determined through a survey to the sponsor and the audiences according to a specified evaluation measure (for example, a certain program or a CM material may be evaluated by requesting the answerer to give their evaluations against a question about the contents of the program or CM material "whether or not the program has any social meaning such as an environmental issue" through five different ranking levels, and thereby giving that subject scores matching to the evaluation). The advertisement effect data 25 indicates a statistical data for an audience rating, such as a reach, frequency and so on calculated from individual indicating data of the audience rating monitors.

A program combination processing section 30 generates "an advertisement portfolio" (described later in detail) representing a combination of the advertisement products, within the limited range of conditions specified or entered by the user through the user purchasing condition input section 10, namely, the user purchasing condition 11, based on each set of data of the program data 21, the organization data 22, the sales data 23, the program evaluation data 24 and the advertising effect data 25, each stored in the advertisement product data storage section 20.

A market data storage section 40 stores market data 41 representing market data (e.g., CPM calculated from the past audience rating data and the advertising rate per unit CM seconds for the advertisement product used on the TV broadcast) required to calculate "a comprehensive advertisement risk management index", or an AR (Advertisement Risk measure)(described later in detail; hereafter referred to as an AR index, if appropriate).

An owned advertisement product data storage section 50 stores owned advertisement product data 51 representing data for the advertisement products owned by the sponsor, including advertisement derivative products such as futures, options and swaps. The owned advertisement product data 51 has, for example, for the case of providing the sponsored program, a variety of contents (e.g., a contracted date: 99/02/20, a division: time spot, a category: regular, a period: 6 months, a division of TV station: TBS, a broadcast start date: 99/04/05, a broadcast end date: 99/09/25, a broadcast start time: 21:00, a broadcast end time: 21:54, a division of the offered seconds: 60 seconds, a division of the sponsor display: yes, a division of purchase or sale: purchase, an offered seconds: 120 seconds, a contracted price: 40 million yen).

A user setting condition input section 60 is used for a user such as a sponsor to enter the conditional terms, which will be set upon calculating the AR index, and the section 60 is designed so that the user can enter 1.) an AR index calculation period covered and a data observation period, 2.) a data complementing method, 3.) with or without eliminating of a outlier/trend, 4.) a method for calculating volatility/correlation coefficient, and 5.) a method for measuring sensitivity, respectively. It is to be noted that if the user does not perform the user setting condition entry, that is, the user does not set any conditional terms, the system use a set of conditions given as a default.

Returning back to Fig. 1, the explanation will be continued.

An AR index calculation processing section 70 receives the data entered respectively from the market data storage section 40, the owned advertisement product data storage section 50, and the user setting condition input section 60, and outputs, based on the data covering all the program combinations selected in the program combination processing section 30, an AR index data 71 indicating a value (e.g., 26,852,350 yen) statistically which represents a maximum unexpected loss amount occurring in the value of the advertisement products owned by the sponsor including the advertisement derivative products such as futures or options at a certain probability during a holding period of the advertisement products.

An AR index data storage section 80 stores the AR index data 71 (e.g., 26,852,350 yen) from said AR index calculation processing section 70, said AR index data 71 indicating statistically the maximum unexpected loss amount occurring in the value of the advertisement products owned by the sponsor including the advertisement derivative products at the certain probability during the holding period of the advertisement products.

An actual loss and gain data storage section 90 stores actual loss and gain data 91 representing the data for an actual loss and gain amount (e.g., 25,782,540 yen) occurring by selling and buying the advertisement products owned by or to be owned by the sponsor including the advertisement derivative products. The actual loss and gain data 91 is calculated by firstly determining a difference between the variety of survey data such as audience rating which the sponsor had used as an index upon purchasing the advertisement product and the data observed actually at the point when a broadcasting has been finished, and by secondarily calculating the actual loss and gain in the value of advertisement product owned by the sponsor yielded by this difference between the expected data (at the point of making a contract) and the actual data (at the time of broadcasting having been finished). That is, the actual loss and gain data 91 is obtained by firstly determining a difference between the variety of survey data such as the audience rating which the sponsor had used as the index upon purchasing the advertisement product and the data observed actually at the point when a broadcasting has been finished, and by secondarily calculating the actual loss and gain yielded by this determined difference in the value of the sponsor owned advertisement products.

A comparative verification processing section 100 receives the actual loss and gain data 91 stored in the actual loss and gain data storage section 90 and the AR index data 81 stored in said AR index data storage section 80, performs the comparative verification by using "a relationship between the comprehensive advertisement risk management index and the advertisement portfolio theory" (which will be described later in detail), and, based on the result from the comparative verification, outputs verification result data 101 indicating the measured number of times of the events that the value of the actual loss and gain data exceeds all of the values of the AR index data 81 determined in the manner described above.

A verification result data storage section 110 stores the verification result data 101 output from said comparative verification processing section 100.

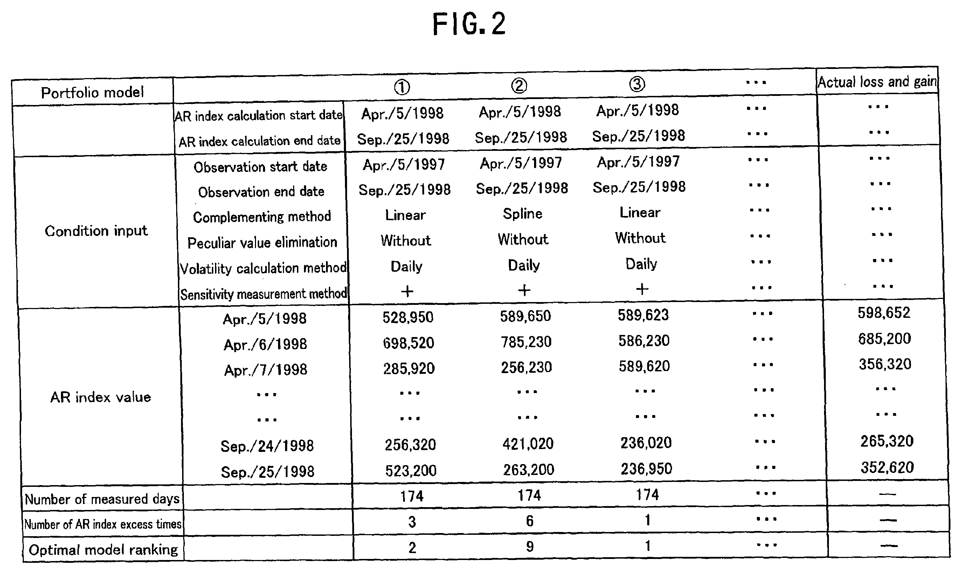

As shown in Fig. 2, said verification result data 101 comprises: a portfolio model 102 (①, ②, ③ ...) for the program purchasing determined from the user purchasing condition; a setting condition 103 by the user for the AR index model subject to the verification; an AR index value 104 during an AR index calculation period; a number of count days 105 during said AR index calculation period; an actual loss and gain 106; the number of the AR index excess times 107; and an optimal model ranking 108. Those will be described later in detail.

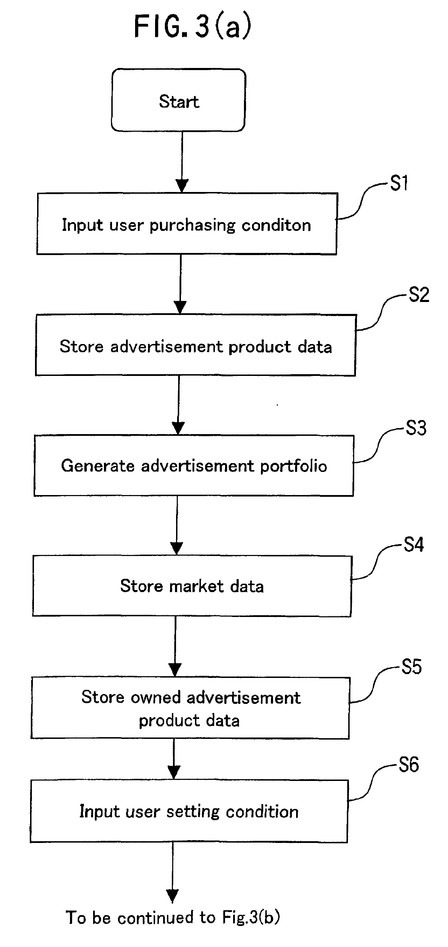

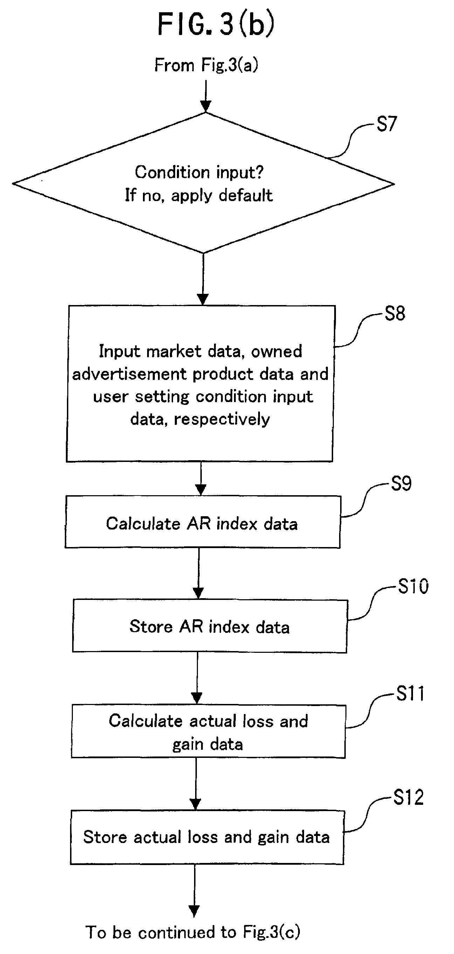

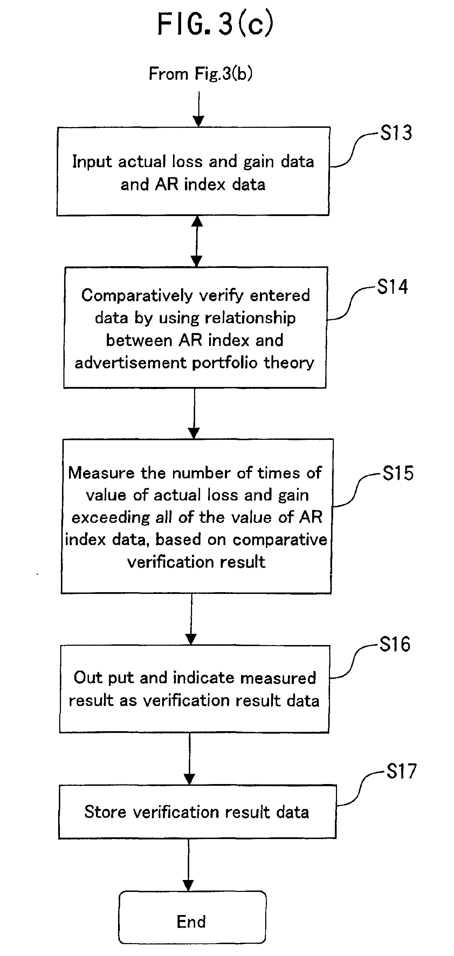

An operation of the system of Fig. 1 will now be explained with reference to the flow diagrams of Figs. 3 (a) to (c).

The above-described user purchasing condition 11 is entered from the user purchasing condition input section 10 of Fig. 1 (step S1), and respective sets of data including said program data 21, said organization data 22, said sales data 23, said program evaluation data 24 and said advertisement effect data 25 are stored in the advertisement product data storage section 20 (step S2).

Then, within the range of said user purchasing condition 11 entered from said user purchasing condition input section 10 and based on the respective sets of data including said program data 21, said organization data 22, said sales data 23, said program evaluation data 24 and said advertisement effect data 25, each stored in said advertisement product data storage section 20, the advertisement product combination processing section 30 of Fig. 1 generates an advertisement portfolio (step S3).

Further, said market data 41 is stored in the market data storage section 40 of Fig. 1 (step S4), said owned advertisement product data 51 is stored in the owned advertisement product data storage section 50 (step S5), and said user setting condition input 61 is entered from the user setting condition input section 60 of Fig. 1 (step S6).

It should be noted that in the steps S1 and S6, if it is determined that the input of said user purchasing condition 11 and/or said user setting condition 61 have not been performed by the user, the condition given as the default is entered (step S7).

Subsequently, the respective sets of data from the market data storage section 40, the owned advertisement product data storage section 50 and the user setting condition input section 60 are entered to the AR index calculation processing section 70 (step S8), and the AR index calculation processing section 70 of Fig. 1, based on said advertisement portfolio generated in the advertisement product combination processing section 30 of Fig. 1, calculates and then outputs said AR index data 71 indicating statistically the maximum unexpected loss amount to be incurred in the value of the advertisement product owned by the sponsor including the advertisement derivative product at a certain probability during the holding period (step S9).

Further, said AR index data 71 output from said AR index calculation processing section 70 is stored in the AR index data storage section 80 of Fig. 1 (step S10), and the difference between the variety of survey data such as audience rating which had been used as an index by the sponsor upon purchasing the advertisement product and the observational data observed actually at the point when the broadcasting has been finished is determined, and based on the loss and gain brought to the value of the advertisement product by the determined difference, the real actual loss and gain data 91 to be produced when the sponsor sells or buys the owned advertisement product is calculated (Step S11), and then the calculated loss and gain data 91 is stored in the actual loss and gain data storage section 90 of Fig. 1(step S12).

Subsequently, said actual loss and gain data 91 stored in the actual loss and gain data storage section 90 of Fig. 1 and said AR index data 81 stored in the AR index data storage section 80 of Fig. 1 are input into the comparative verification processing section 100 of Fig. 1 (step S13), and the comparative verification processing section 100 uses the relationship between the comprehensive advertisement risk management index and the advertisement portfolio theory, as will be described later, so as to perform the comparative verification (step S14).

Based on the result from the comparative verification by said comparative verification processing section 100, the times of events that the value of the actual loss and gain data exceeds all of the values of the AR index data 81 determined in the manner described above is counted (step S15), and then the counted result is outputted and indicated as the verification result data 101 (step S16).

Then, said verification result data 101 outputted from said comparative verification processing section 100 is stored in the verification result data storage section 110 of Fig. 1 (step S17).

A detailed description for respective operations described above will be shown below.

At first, a user enters via the user purchasing condition input section 10 of Fig. 1 the respective terms of the user purchasing condition 11 as designated below:

11-1.    Advertising budget
11-2.    Period of purchasing
11-3.    Area specified
11-4.    Broadcasting hour specification
11-5.    Program genre specification
11-6.    Excluding genre specification
11-7.    Program division specification
11-8.    CPM restriction
11-9.    Family audience rating restriction
11-10.    Individual audience rating restriction
11-11.    Target total GRP
11-12.    CM material type
11-13.    Contracted personality

11-14.    Program evaluation reference point

Above-described user purchasing condition is necessary to retrieve a plurality of advertisement products matching to the user purchasing condition from the advertisement product data storage section 20 and to make a list of those advertisement products arranged in order according to their ranking in the evaluation criteria, with an aid of the information entered into the system, which indicates what reference is used by the sponsor upon purchasing an advertisement product to evaluate the value of the advertisement product and make a decision on the purchase.

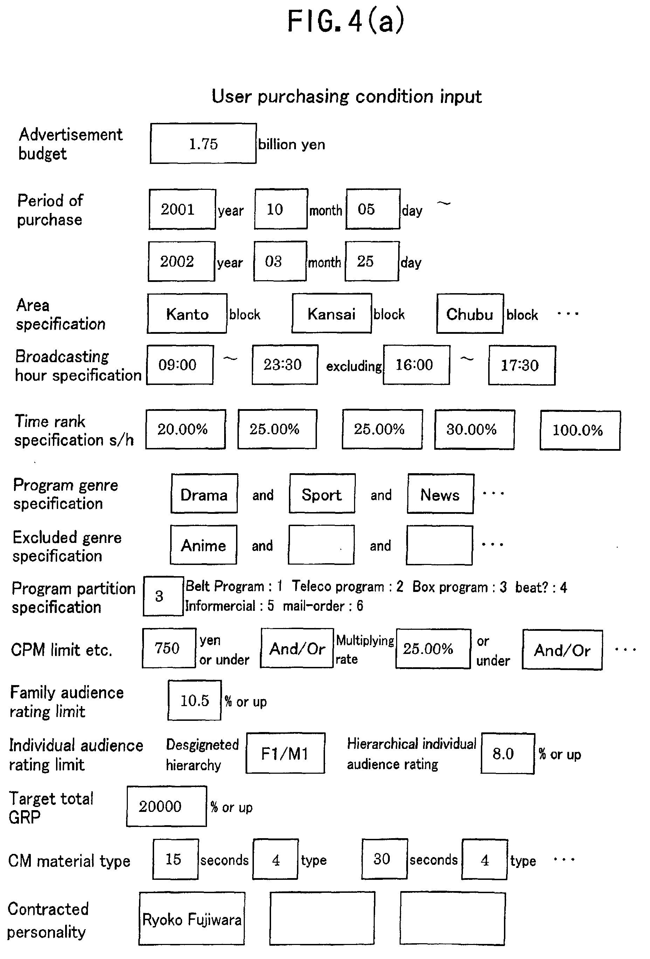

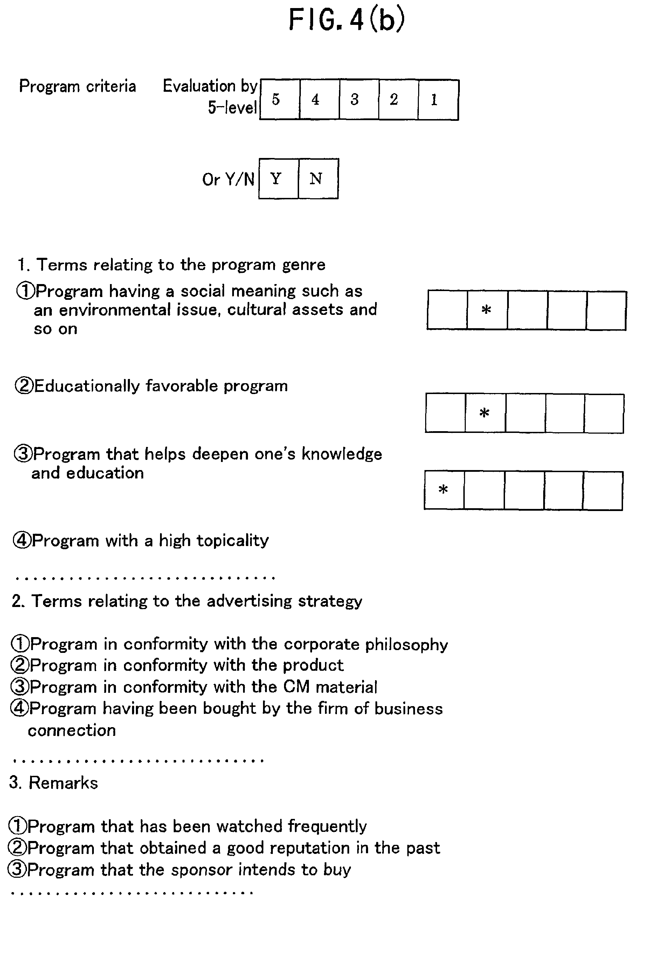

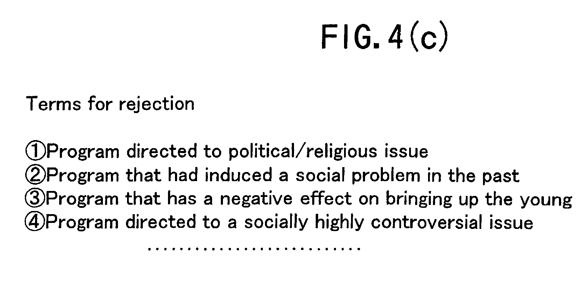

Above-described advertising budget indicates an upper limit of the amount allowed to be invested by the sponsor for purchasing the advertisement product during a certain period, which may be specified as, for example, 1.75 billion yen as shown in Fig. 4(a).

Above-described period of purchasing means a term, to which said advertising budget may be applied, and may be specified as, for example, October 5, 2001 to March 25, 2002, as shown in Fig. 4(a).

Above-described area specification is one of the conditions for specifying an attribute of the advertisement product, which specifies a specific area, for example, Kanto block, Kansai block or Chubu block, as shown in Fig. 4 (a), where the sponsor wants to purchase the introduced advertisement product.

Above-described broadcasting hour specification and the time rank specification are used to specify the broadcasting hour or the time rank for the advertisement product which the user wants to buy by, for example,(1) specifying the period in the range of 9:00~23:30, excluding the range of 16:00~17:30, or (2) specifying the share "h" for the number of volumes of the advertising exposure or the share "s" for the advertising budget by way of indicating an allocation of 20% for A rank time, 25% for Special B rank time, 25% for B rank time and 30% for C rank time. On the purpose of the present invention, the time rank means a base rate for a broadcasting service determined by each broadcasting business company, typically defined hourly as an A time rank, a Special B time rank, a B time rank and a C time rank, wherein the base rate has been individually determined for each of those time ranks.

Above-described program genre specification and the excluding genre specification are the terms used to specify the conditions indicating what genre of the contents of the advertisement product to be purchased or not to be purchased, which may be specified as, for example, drama/sport/news to be purchased and animation to be excluded, as shown in Fig. 4(a).

Above-described program division specification is the term to specify the division of organization for the program to be purchased, and may be specified by selecting the box program of No. 3 among the belt program:1, the telecommunication program:2, the box program:3, the special program:4, the infomercial:5 and the mail-order:6, as shown in Fig. 4(a).

Above-described CPM restriction and multiplying rate restriction may be determined by specifying the criteria for determining the cost upon purchasing as (1) applying the CPM, (2) applying the multiplying rate (=buying rate/base rate), or (3) applying the A time rank CPM per unit, and then by designating a specific numeric value for the upper limit such as the CPM of 750 yen or lower, the multiplying rate of 25% or lower and so on, as shown in Fig. 4(a).

Above-described family audience rating restriction and the individual audience rating restriction designate the lower limits for the target average audience rating to be referred upon purchasing and may be specified as, for example, 10.5% for the family audience rating and 8.5% and higher for the M1/F1 in the hierarchical specification, as shown in Fig. 4 (a). It is to be noted that the CPM (Cost Per Mille) designates the advertising achievement cost per 1,000 families or 1,000 people, and there is an equivalent term, CPT (Cost Per Thousand).

Above-described target total GRP is a cumulative total audience rating for a plurality of programs purchased in said period of purchasing, and may be specified as, for example, 20,000% or higher, as shown in Fig. 4(a).

Above-described CM material type and the contracted personality are necessary items to evaluate the correlation between the program to be purchased and the contents of the advertisement material and the contracted personality and thus to extract automatically a program of higher correlation from the advertisement product data storage section 20 by entering the contents of the CM used as the advertisement material and the contracted personality, and they may be specified by entering, for example, a specific seconds and/or type of the CM material for the advertisement material and a specific personality. As for the advertisement material type, it should have been entered beforehand in the same format as that of the program evaluation criteria, which will be explained later, so that the correlation with the program data 21 can be calculated.

Above-described program evaluation reference point is, as shown in Fig. 4 (b) and Fig. 4(c), the information to be used upon purchasing a program as an index for making a decision based on its rating information which is provided by the sponsor or a specific audience by evaluating the contents of the program including detailed contents thereof, which cannot be covered only by the program genre, by way of a 2-level or 5-level evaluation in advance and thereby determining the rating of the contents for each program. This information is to facilitate the purchasing of the advertisement product based on the own evaluation data of sponsor or audience for the program, and thus, by quantifying the qualitative program contents, to allow the advertisement product to be purchased with the quantitative condition being taken into consideration.

Herein, the process will return to the description of the operation again.

In this next stage, the user inputs from the user setting condition input section 60 of Fig. 1 each of those terms in the user setting condition input 61 as shown below:

61-0.    AR index calculation period

61-1.    Data observation period

61-2.    Smoothing method of data

61-3.    With or without elimination of a outlier/trend

61-4.    Calculating method of volatility/correlation coefficient

61-5.    Measuring method of sensitivity

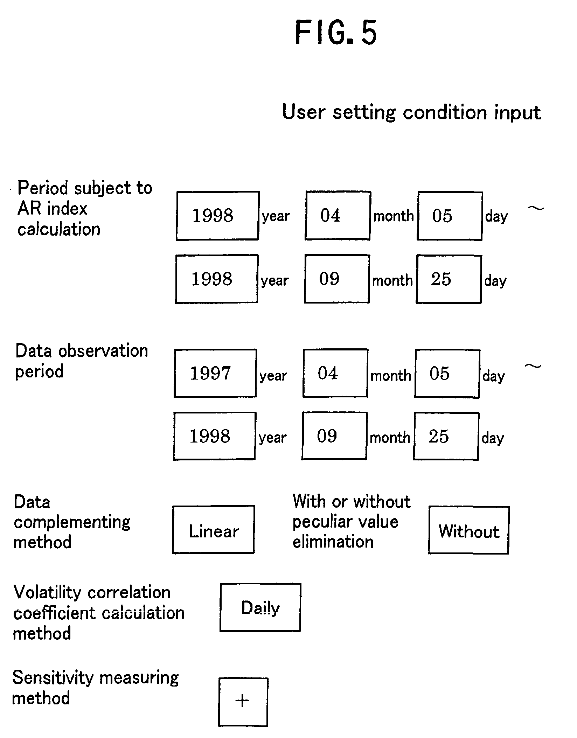

As for a specific example for each of these terms described above, as shown in Fig. 5, the AR index calculation period of "April 5, 1998 to September 25, 1998" and the data observation period of "April 5, 1997 to September 25, 1998" are respectively set (step S102), and then the smoothing method of data is selected from a group consisting of (1) no smoothing, (2) a linear smoothing and (3) a spline smoothing (the linear smoothing has been exemplarily selected in this embodiment). Then, the term of with or without elimination of a outlier/trend (outlier elimination) is selected from a group consisting of (1) eliminating (with) and (2) not-eliminating (without) (the (2) "without" has been exemplarily selected in this embodiment); the term of calculating method of volatility/correlation coefficient is selected from a group consisting of, for example, (1) daily (2) 10-day interval, (3) 20-day interval and (4) 30-day interval (the (1) daily has been exemplarily selected in this embodiment); and further the term of measuring method of sensitivity is selected from a group consisting of (1) +1bp (1bp=0.01%), (2) -1bp and (3) an average of absolute value of difference between (1) and (2) (the (1) +1bp has been selected exemplarily in this embodiment).

The system has been programmed such that, if there are any terms to which the user has gave no selection, the user purchasing condition input section 10 and/or the user setting condition input section 60 may employ a condition that has been set in advance (a default condition) as the user purchase entry 11 and/or the user setting condition entry 61. It is to be noted that the selection of the setting condition would not cause any change in the mode of the input data and the output data, and therefore the selection of the setting condition could not affect the overall process flow.

Then, a plurality of AR indexes is calculated for all of the possible combinations according to the selected parameters and methods, as will be explained below.

As will be described later, from the definition of the AR index, in which a maximum unexpected loss amount of the CPM under the condition of a certain confidence interval possibly caused by the advertisement product being exhibited below an expected value is defined as a "comprehensive advertisement risk management index" AR (Advertisement Risk measure), if a standard deviation in the audience rating for a certain program is denoted as " σ " and a cumulative distribution function to a random variable "x" according to a normal distribution is denoted as N(x), then a audience rating R $\alpha$ is calculated as follows:

$$R\alpha = \bar{R} - N^{-1}(1-\alpha)\sigma$$

and, accordingly,

$$AR = CPM \times \langle[\bar{R}/\{\bar{R} - N^{-1}(1-\alpha)\sigma\}] - 1\rangle$$
$$= CPM \times \{N^{-1}(1-\alpha)\}/\{(\bar{R}/\sigma) - N^{-1}(1-\alpha)\}$$

Herein, the confidence interval designates an interval in which an actual audience rating falls at a certain probability. For example, taking as an example an advertisement product having the expected audience rating of 10% and the standard deviation of 20%, if the audience rating is in the normal distribution, then at the probability of 95%, the actual audience rating may fall in a interval of +/-2 sigma (standard deviation), i.e., in a interval of from 10%-2x20% = -30% to 10%+2x20% = +50%. In other words, for the confidence interval of 95%, the lower limit should be -30% and the upper limit +50%.

To calculate the AR index for overall "advertisement portfolio" y=(y$_1$,...,y$_n$) (which will be described in detail later) according to the present invention, assuming that the standard deviation in the audience rating for a program "S$_j$" is denoted as "σ$_j$" and the cumulative distribution function to the random variable "x" (=audience rating) according to the normal distribution is denoted as N(x), then an audience rating averaged over the whole advertisement portfolio $\bar{R}_p$ is calculated as follows:

$$\overline{R}_p = \Sigma y_j \overline{R}_j \qquad (j=1,...,n) \tag{*}$$

The variance for the overall advertisement portfolio, $\sigma_p$, is determined as follows:

$$\sigma_p = \Sigma\Sigma y_j y_k \sigma_{jk} \qquad (j=1,...,n,\ k=1,...,n) \tag{**}$$

(wherein, $\sigma_{jk}$ is a covariance of an audience rating of advertisement product j and that of another advertisement product k.)

From the definition of the correlation coefficient, assuming that the correlation coefficient for the advertisement products j and k is denoted as $\rho_{jk}$, the following relational expression can be defined:

$$\rho_{jk} = \sigma_{jk}/\sigma_j \sigma_k \tag{***}$$

wherein, from said definition of the AR, representing as $R\alpha = \overline{R}_p$, $\sigma = \sigma_p$, then the AR index for the overall portfolio, $AR_p$, is expressed as follows:

$$AR_p = CPM \times \left\langle \left[ \overline{R}_p / \left\{ \overline{R}_p - N^{-1}(1-\alpha)\sigma_p \right\} \right] - 1 \right\rangle$$
$$= CPM \times \left\{ N^{-1}(1-\alpha) \right\} / \left\{ (\overline{R}_p / \sigma_p) - N^{-1}(1-\alpha) \right\}$$

It is apparent from the above expression that minimizing of the AR index for the overall advertisement portfolio, $AR_p$, is equivalent to minimizing of the variance for the overall advertisement portfolio, $\sigma_p$, and thus determining of the most suitable advertisement portfolio $y=(y_1,...,y_n)$ is equivalent to solving for the following relational expression:

$$\text{minimize } \Sigma\Sigma\sigma_{jk}y_j y_k \tag{1}$$

$$\text{subject to } \Sigma\overline{R}_j y_j / \Sigma y_j \geqq RE \tag{2}$$

$$W_L \leqq \Sigma P_j y_j \leqq W_U \tag{3}$$

$$y_j : \text{integer variable} \tag{4}$$

Reviewing the preceding, to determine the optimal portfolio, the averaged audience rating $\overline{R}_j$. for the advertisement product j having the parameter $y_j$ as shown in said equation (*) is used as the observational data, while the $y_j$ which can minimize said expression (**) $\sigma_p = \Sigma\Sigma y_j y_k \sigma_{jk}$ should be determined under the condition constrained by said expressions (2) to (4).

As obvious from said equation (1), in order to determine the optimal advertisement portfolio, it is necessary to calculate the covariance $\sigma_{jk}$ for the advertisement product j and the other advertisement product k.

At first, the conditional terms for the advertisement product desired by the sponsor are input from the user purchasing condition input section 10, secondarily programs that meet the conditions are retrieved from the advertisement product data 26 consisting of the program data 21, the organization data 22, the sales data 23, the program evaluation data 24 and the advertising effect data 25, which have been stored in the advertisement product data storage section 20, and lastly the program combination processing section 30 generates a plurality of portfolio models by combining a plurality of programs matching to said conditions.

In this regard, for the plurality of programs satisfying said conditions, the outlier should be eliminated from the observational data (the audience rating data for an advertisement on television) stored in the market data storage section 40. There may be possibly a variety of errors existing or included in the actual data, and a part of those errors may indicate the value departing from the essential data value due to some reason. In the statistics, it has been said that when the data is examined in an exploring manner, preferably the affection from such outlier should be blocked so as to be minimized In this embodiment, the data existing at a distance of the standard deviation multiplied by a certain integer from the average value is considered as the outlier, and the observational data is corrected such that the data should not include said outlier. That is to say, the process determines whether or not a outlier should be eliminated, and if it is determined that the outlier should be eliminated, then the process eliminates from the observational data such outlier that is detected under said condition (i.e., the condition defining that the outlier is the existing at a distance of the standard deviation multiplied by a certain integer from the average value). The AR index calculation section 70 uses above expression (***) to calculate the volatility data (the standard deviation $\sigma_j$, $\sigma_k$) with the data after having been applied with the data smoothing operation. Further, the AR index calculation section 70 calculates the correlation coefficient data (the correlation coefficient $\rho_{jk}$ of the advertisement product j and the advertisement product k) from the volatility data. Thereby, the covariance $\sigma_{jk}$ of the advertisement product j and the advertisement product k can be calculated.

On the purpose of this specification, the term of volatility is used as the risk measure, which means the probability that an expected rate of return falls in an expectation, and it may be represented as a standard deviation. A higher volatility implies higher probability that the expected rate of return falls out of the expectation by a great degree. Further, the expected rate of return is defined as a sum of numeric values determined by all of the possible rates of return multiplied respectively by the probability of occurrence.

The manner for calculating the volatility (the standard deviation) and/or the correlation coefficient from the observational data uses the same formula as that used to calculate the standard deviation and/or the correlation coefficient from the population.

On the other hand, based on the owned advertisement product data, a market value data of the owned advertisement product is detected from the market data storage section 40, and based on said detected market value data, the sensitivity data is calculated.

The sensitivity data is the data relating to the risk factor used to see how much the market value may vary with respect to a change in the associated underlying product value or market index.

Said risk measure may include, the correlation, beta, delta($\Delta$), gamma ($\gamma$), theta ($\theta$), vega ($\nu$), rho ($\rho$) and basis. All of the advertisement products including the derivatives share those risk measures, and integrating and managing of those risk measures enables the comprehensive risk management for the advertisement portfolio containing a variety of advertisement products therein. Because of this, the sensitivity data calculation should be very important.

Then, based on above-described volatility data, the correlation coefficient data and the sensitivity data, the AR index data is calculated individually for (1) all of the advertisement portfolios generated in the program combination processing section 30 and (2) the advertisement portfolio for the advertisement product owned by the sponsor at the current time, and subsequently based on the AR index conversion value data which can be calculated from all of the calculated AR index data and the actual loss and gain data, such a table as shown in previously referred Fig. 2 is generated.

Herein, to explain the AR index conversion value data of Fig. 2, the actual loss and gain data (e.g., the figure of 598,652 indicated as corresponding to the row of 1998/4/5) is the real data of the actual loss and gain which may occur by selling or buying the advertisement product owned by the sponsor, including the advertisement derivative products such as futures, options and swaps, and the actual loss and gain may be calculated by firstly determining a difference between a variety of survey data, such as audience rating, which was used as an index when the sponsor purchased the advertisement products, and an actually observed data at the end of the broadcasting of the advertisement product, and secondarily by calculating the actual loss and gain to be brought to the sponsor based on the difference between the estimated data (at the point of making a contract) and the actual data (at the end point of the broadcasting of the advertisement product). Accordingly, the AR index conversion value data is a form of data indicating the actual loss and gain data converted into the CPM.

Then, the comparative verification processing section 100 uses "the relationship between the comprehensive advertisement risk management index and the advertisement portfolio theory" according to the present invention to performs the comparative verification between all of the AR index values and the AR index conversion values for above-described portfolios (1) and (2), thus measures the number of the events that the AR index conversion value in the actual loss and gain data exceeds the values in the AR index data, and establishes the models according to the optimal model ranking, where the model having a smaller number of excess events is considered to be much closer to the optimal model.

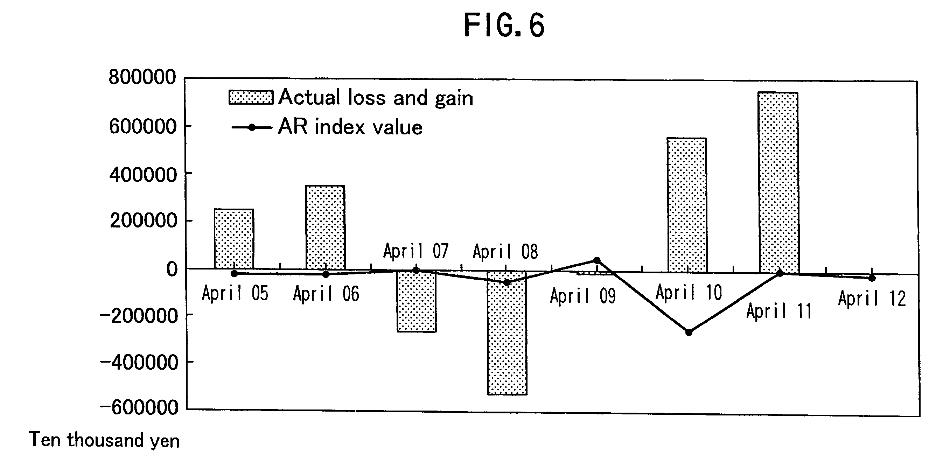

Fig. 6 shows a time series graph for each of said generated models (the days are the horizontal axis, and the AR index values and the AR index conversion values for the actual loss and gain are the vertical axis). The values of the AR index should be represented by negative values since they are representing the maximum unexpected loss amounts. The number of events that the values of the AR index exceed the AR index conversion values for the actual loss and gain has been counted as the excess times.

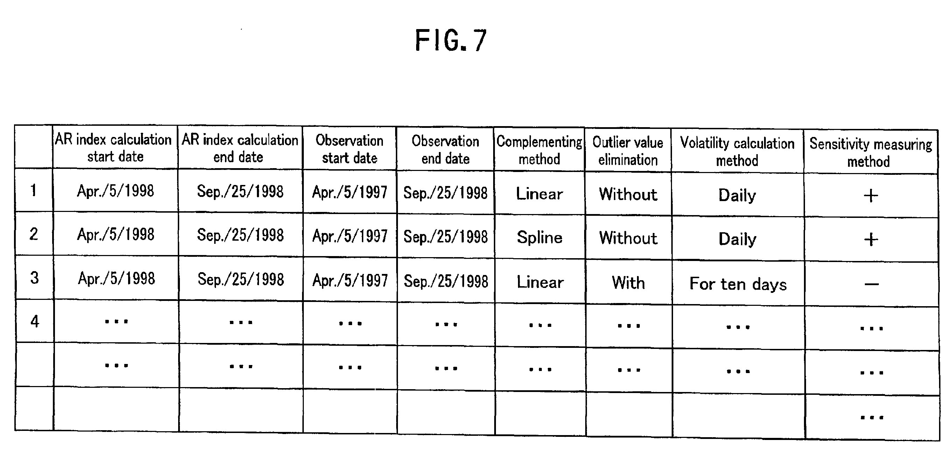

Fig. 7 is a table generated by organizing and editing the verification result table of Fig. 2, and the models therein are indicated according to the possibly optimal model ranking. Comparing of the setting conditions allows to examine the trend of each of the selection methods.

Now, each of the aforementioned risk measures will be described in brief. The delta ($\Delta$) denotes a sensitivity of "market price (present value)" with respect to a price change in the associated market index (underlying product) for the derivative product. The gamma ($\gamma$) denotes a sensitivity of the delta itself with respect to a change in the market index. The theta ($\theta$) denotes a sensitivity of "the market price" with respect to a decrease in time. The vega ($\nu$) denotes a sensitivity of "the market price" with respect to the volatility. The rho ($\rho$) is a sensitivity of "the market price" with respect to a change in an interest rate(a discount factor). The basis would be necessary when two underlying products exhibiting different changes in price have to be managed by using the risk index system for either one of them, and there should be needed some weight for integrating the price change for the other into that for the one. This weight should be referred to as the basis, which can be determined with the correlation coefficient from the historical data.

Now, a role of the sensitivity data in the risk management of the advertisement portfolio will be explained in more detail by illustratively describing the correlation and the beta taken as the examples of said risk measures.

In general, if n sets of data $\{(X_1,Y_1), (X_2,Y_2),..., (X_n,Y_n)\}$ are observed and those sets of data are used to estimate $\alpha$ and $\beta$ in the expression $y = \alpha + \beta x + e$, it is assumed that said n sets of data satisfy $y = \alpha + \beta x + e$, and then;

$$y_j = \alpha + \beta x_j + e \qquad (j=1,2,...,n) \qquad (12)$$

where, using an estimation expression denoted as $\hat{y}=\hat{\alpha}+\hat{\beta}x$, and the value of x being $x_j$, then the estimated value $\hat{y}_j$ satisfies,

$$\hat{y}_j = \hat{\alpha}+\hat{\beta}x_j \qquad (j=1, 2, ..., n)$$

Defining a difference between the observed value $y_j$ and the estimated value $\hat{y}_j$ as "a residual", the residual $e_j$ for the observed value $(x_j, y_j)$ is expressed as:

$$e_j = y_j\hat{y}_j \qquad (13)$$

Herein, using the least square method for specifyng the $\hat{\alpha}$ and $\hat{\beta}$ so as to minimize the square sum of the residual $e_j$ between the observed value $y_j$ and the estimated value $\hat{y}_j$, then;

$$\sum_{j=1}^{n}e_j^{2} = \sum_{j=1}^{n}(y_j - \hat{y}_j)^2 = \sum_{j=1}^{n}(y_j - \hat{\alpha} - \hat{\beta}x_j)^2 \qquad (14)$$

Herein, in order to minimize the function of said two variables $\hat{\alpha}$ and $\hat{\beta}$, the process is only required to set the partial derivatives with respect to such variables $\alpha$ and $\beta$ equal to zero, and accordingly;

$$\partial\sum_{j=1}^{n}e_j^{2} \Big/ \partial\hat{\alpha} = -2\sum_{j=1}^{n}(y_j - \hat{\alpha} - \hat{\beta}x_j) = 0 \qquad (15)$$

$$\partial\sum_{j=1}^{n}e_j^{2} \Big/ \partial\hat{\beta} = -2\sum_{j=1}^{n}(x_jy_j - \hat{\alpha}x_j - \hat{\beta}x_j^{2}) = 0 \qquad (16)$$

$$\sum_{j=1}^{n}y_j = n\hat{\alpha} +\hat{\beta}x\sum_{j=1}^{n}x_j$$

$$\sum_{j=1}^{n} x_j y_j = \hat{\beta} \sum_{j=1}^{n} x_j^2 + \hat{\alpha} \sum_{j=1}^{n} x_j$$

where,

$$\sum_{j=1}^{n} \hat{\alpha} = n\hat{\alpha}$$

Giving a solution to the above expression (16);

$$\hat{\alpha} = \bar{y} - \hat{\beta}\bar{x} \tag{17}$$

$$\hat{\beta} = \sum_{j=1}^{n}(x_j - \bar{x})(y_j - \bar{y}) / \sum_{j=1}^{n}(x_j - \bar{x})^2$$

$$= \sigma_{xy} / \sigma_x^2$$

where,

$$\bar{x} = (1/n)\sum_{j=1}^{n} x_j \ , \quad \bar{y} = (1/n)\sum_{j=1}^{n} y_j$$

That is, under the assumption that the relational expression of the n sets of data $\{(X_1,Y_1), (X_2,Y_2),..., (X_n,Y_n)\}$ is represented by a certain linear function of $x_j$ and $y_j$, an intercept and a slope of the linear function can be determined in the manner as described above. Upon determination, it is an important matter that, as denoted in the expression (17), the $\beta$ value can be estimated by a covariance of x and y, $\sigma_{xy}$.

Now, consider the case where return data generated by a single regression model as described above is used to an advertisement portfolio model.

Herein, it is assumed that n kinds of advertisement product $S_j$ (j=1, 2, ..., n) exist in an advertisement market, and a return of the market index for a certain advertisement product is denoted as $R_m$. Then, assuming that $\beta_j$ is an expected rate of change (sensitivity index) of the return $R_j$ for the advertisement product $S_j$ to a change in $R_m$; $\alpha_j$ is an expected value of an individual return for the advertisement product $S_j$ independently from this advertisement market; and $e_j$ is a random term (error) of the individual return for the advertisement product $S_j$ independently from this advertisement market, then there will be derived from the relationship of above-described single regression model such an equation as:

$$R_j = \alpha_j + \beta_j R_m + e_j \qquad (j=1, 2,..., n) \tag{18}$$

To describe the relationship between the expected value E(x) and the variance V(x) in conjunction with the $e_j$ and $R_m$, the following relational expressions may be derived from the definitional equations of the expected value and the variance (see Fig. A).

$$E(e_j) = 0, \ (j=1,2,..., n)$$

$$E\left[e_j(R_m - \overline{R}_m)\right] = 0, \ (\because \ \text{covariance of } e_j \text{ and } R_m \text{ is equal to zero})$$

$$E(e_i {}^* e_j) = 0, \ (i,j=1, 2, ..., n, \text{ and } i \neq j)$$

$$V(e_j) = E(e_j^2) = \sigma e_j^2, (j=1,2,..., n)$$

$$V(R_m) = E(R_m - \overline{R}_m)^2 = \sigma_m^2$$

From the above relational expressions, the return of the advertisement product $S_j$ may be described by using two separate terms including the return $\alpha_j$ unique to the advertisement product $S_j$ and the return $\beta_j\overline{R}_m$ in association with the market. That is expressed as:

$$\overline{R}_j = \alpha_j + \beta_j\overline{R}_m \qquad (19)$$

Further, the variance of the advertisement product $S_j$ may be described by using two separate terms including the risk $\sigma e_j^2$ unique to the advertisement product $S_j$ and the risk $\beta_j^2 \sigma_m^2$ in association with the market. That is expressed as:

$$\sigma_j^2 = \beta_j^2 \sigma_m^2 + \sigma e_j^2 \qquad (20)$$

Further, it may be described as the covariance depending only on the market risk. That is expressed as:

$$\sigma_{ij} = \beta_j \beta_j \sigma_m^2 \qquad (21)$$

From the above examination, the return of the advertisement product $S_j$ may be described by using separate terms including the return ($\alpha_j$) unique to the advertisement product $S_j$ and the return ($\beta_j\overline{R}_m$) in association with the market, and also the variance (risk) of the advertisement product $S_j$ may be described by using separate terms including the risk ($\sigma e_j^2$) unique to the advertisement product $S_j$ and the risk ($\beta_j^2 \sigma_j^2$) in association with the market. Further, the covariance ($\sigma_{ij}$) may be described to be dependent only on the market risk ($\beta_j\beta_j\sigma_m^2$). Defining those models as a single index model in the advertisement market, for the advertisement portfolio, the following relationship may be established: for the return of the advertisement portfolio:

$$\overline{R}_p = \sum_{i=1}^{n} x_i \overline{R}_i = \sum_{i=1}^{n} x_i \alpha_i + \sum_{i=1}^{n} x_i \beta_i \overline{R}_m$$

and
for the variance:

$$\sigma_p^2 = \sum_{i=1}^{n} x_i^2 \sigma_i^2 + \sum_{i=1}^{n}\sum_{\substack{j=1 \\ j \neq i}}^{n} x_i x_j \sigma_{ij}$$

$$= \sum_{i=1}^{n} x_i \beta_i^2 \sigma_m^2 + \sum_{i=1}^{n}\sum_{\substack{j-1 \\ j \neq i}}^{n} x_i x_j \beta_i \beta_j \sigma_m^2 + \sum_{i=1}^{n} x_i^2 \sigma_{ei}^2$$

$$= (\sum_{i=1}^{n} x_i \beta_i)(\sum_{j=1}^{n} x_j \beta_j)\sigma_m^2 + \sum_{i=1}^{n} x_i^2 \sigma_{ei}^2$$

$$= \beta_p^2 \sigma_m^2 + \sum_{i=1}^{n} x_i^2 \sigma_{ei}^2 \qquad (\#)$$

Introducing of above-described single index model can reduce the number of parameters to be estimated to $3n+2$, $(\alpha_i, \beta_i, \sigma_{ei}, \bar{R}_m \sigma_m^2)$ from $n(n+3)/2$, $(\bar{R}_i, \sigma_{ij}$ or $\bar{R}_i, \sigma_j, \rho_{ij})$ for the average/variance models, and thus can greatly reduce the volume of the calculation required to analyze the portfolio.

The most significant feature of the market model described above can be observed in that the correlations seen among the respective advertisement products has been replaced with the relationships between the market and the respective advertisement products, wherein, for example, the total of n pieces of regression models may be considered for n pieces of advertisement products, with an assumption that the term of error for each different regression model has no correlation with one another. Accordingly, since it has been assumed that the associatively changing characteristics observed among the respective advertisement products can be totally explained with the relationship through the entire market, therefore the load of the calculation required for the analysis can be reduced greatly. Further, since it has been assumed that the error term for the regression model of each of the advertisement products is in the normal distribution with the expected value of zero and the constant variance, and is independent from one another, and also has no correlation with $R_m$, therefore the following relational expression may be established;

$$e_i \sim N(0, \sigma_{ei}^2), \ E[e_i(R_m - E[R_m])] = 0$$

$$E[e_i, e_i] = 0, \ i \neq j$$

Herein, the $\alpha_p$ and $\beta_p$ in the advertisement portfolio models are expressed as:

$$\alpha_p = \sum_{i=1}^{n} x_i \alpha_i \qquad (+)$$

$$\beta_p = \sum_{i=1}^{n} x_i \beta_i \qquad (++)$$

and, the return $\bar{R}_p$ of the advertisement portfolio is expressed as:

$$\bar{R}_p = \alpha_p + \beta_p \bar{R}_m \qquad (+++)$$

In this regard, if $\alpha_p = 0$ and $\beta_p = 1$, then $\bar{R}_p = \bar{R}_m$, resulting in the return of the advertisement portfolio "P" identical with that of the market portfolio.

Accordingly, it may be evaluated that;

*$\beta_p > 1$: the advertisement portfolio P is more risky than the market, and
**$\beta_p < 1$: the advertisement portfolio P is less risky than the market.

Herein, assuming for the variance of the portfolio in the expression (#) as $x_i = 1/n$, then:

$$\sigma_p^2 = \beta_p^2 \sigma_m^2 + (1/n)(\sum_{i=1}^{n} \sigma_{ei}^2 / n)$$

and, as is obvious, when the n is getting greater, the average residual risk of said second term is getting smaller.

From the above examination, by using the relational expression of $\sigma_i^2 = \beta_i^2 \sigma_m^2 + \sigma_{ei}^2$ as the risk in each of the advertisement products, the risk can be categorized into the risk $\beta_i^2 \sigma_{ei}^2$ that is independent from the volume of the n (systematic risk, market risk, or non-diversifiable risk) and the risk $\sigma_{ei}^2$ that approaches to zero as the n becomes greater (non-systematic risk, diversifiable risk, or non-market risk). A sufficiently large portfolio, in which the non-systematic risk may be such small that can be ignored, can use the $\beta_i$ as the risk measure for the advertisement product "i".

Thus, the risk index $\beta$ of the market can provide the important information in comparison between the risk of the advertisement market and the risk of the advertisement portfolio model. Further, the measurement of the correlation (covariance) is significantly important in comparison of risks among an advertisement market model, an advertisement portfolio model and an individual advertisement product.

As for the single index model (S.I.M) described above, a multi-index model (M.I.M) may be established for the case of a plurality of market indexes. Assuming as:

$I_k$: the value of the index k;
$b_{ik}$: the sensitivity index of the advertisement product "i" responsive to the return with respect to a change in the index k;
$a_i$: the expected value of the individual return for the advertisement product i;
$c_i$: the random term of the individual return for the advertisement product i;
L: the number of indexes; and
n: the number of advertisement products. Then:

$$R_i = a_i + \sum_{k=1}^{L} b_{ik} + c_i \qquad\qquad (¥)$$

where, i = 1,..., n

$$E[c_i] = 0$$

where, i=1,...,n

$$\mathrm{cov}(I_k, I_l) = E[(I_k - \bar{I}_k)(I_l - \bar{I}_i)] = 0$$

$$\text{where, k, l} = 1, ..., \text{L, and k} \neq l \qquad\qquad (¥¥)$$

$$\mathrm{cov}(c_i, I_k) = E[c_i(I_k - \bar{I}_k)] = 0$$

where, i=1, ..., n, and k=1,...,L

$$E[c_i, c_j] = 0$$

where, i,j = 1, ..., n and i $\neq$ j

Herein, the variance of $c_i$, $I_k$ is defined as follows:

$$V(c_i) = \sigma_{ei}{}^2$$

where, i = 1, ..., n

$$V(I_k) = \sigma_{Ik}{}^2$$

where, k = 1,..., L

From the above definitional expression (¥) of the multi-index model and the above conditional expression (¥¥), there will be derived such equations as:

$$\overline{R}_i = a_i + \sum_{k=1}^{L} b_{ik} \overline{I}_k$$

The expected value:

$$= E\left[ a_i + \sum_{k=1}^{L} b_{ik} I_k + c_i \right]$$

$$= a_i + \sum_{k=1}^{L} b_{ik} E[I_k] + E[c_i]$$

The variance:

$$\sigma_i^2 = \sum_{k=1}^{L} b_{ik}{}^2 \sigma_{Ik}{}^2 + \sigma_{ei}{}^2 = E[R_i - \overline{R}_i]^2$$

$$= E\left[ (a_i + \sum_{k=1}^{L} b_{ik} I_k + c_i) - (a_i + \sum_{k=1}^{L} b_{ik} \overline{I}_k) \right]^2$$

$$= E\left[ \sum_{k=1}^{L} b_{ik} (I_k - \overline{I}_k) + c_i \right]^2$$

$$= \sum_{k=1}^{L} b_{ik}{}^2 E[(I_k - \overline{I}_k)^2] + \sum_{k=1}^{L} \sum_{l=1}^{L} b_{ik} b_{il} E[(I_k - \overline{I}_k)(I_l - \overline{I}_l)] + 2\sum_{k=1}^{L} b_{ik} E[c_i(I_k - \overline{I}_k)] + E[c_i]^2$$

$$l \neq k$$

The covariance:

$$\sigma_{ij}^{\,2} = \sum_{k=1}^{L} b_{ik} b_{jk} \sigma_{Ik}^{\,2} = E\big[(R_i - \overline{R}_i)(R_j - \overline{R}_j)\big]$$

$$= E\left\{\left[\sum_{k=1}^{L} b_{ik}(I_k - \overline{I}_k) + c_i\right]\left[\sum_{k=1}^{L} b_{jk}(I_k - \overline{I}_k) + c_j\right]\right\}$$

$$= \sum_{k=1}^{L} b_{ik} b_{jk} E\big[I_k - \overline{I}_k\big]^2 + \sum_{k=1}^{L}\sum_{\substack{l=1 \\ l \neq k}}^{L} b_{ik} b_{jl} E\big[(I_k - \overline{I}_k)(I_l - \overline{I}_l)\big] + \sum_{k=1}^{L} b_{ik} E\big[c_j(I_k - \overline{I}_k)\big]$$

$$+ \sum_{k=1}^{L} b_{jk} E\big[c_i(I_k \overline{I}_k)\big] + E\big[c_i \cdot c_i\big]$$

Herein, it is to be confirmed that if L=1, then the multi-index model may have the same expressions as those of the expected value, variance and covariance in the single index model.

According to the theory of modeling discussed above, when the indexes are specified properly, the return of a certain advertisement product can be described in a simulative manner with individual indexes, and if this method is applied to the risk determination, the risk for a variety kinds of advertisement portfolio models generated by the present system can be measured and determined.

Now, the return in the advertisement product will be described. It will be naturally understood that a buyer in purchasing the advertisement products, as well as in buying the financial products, would make an investment in those advertisement products based on an idea that the product is a kind of means to obtain some return.

For the financial products, for example, the rate of return for the securities "i" in the term "t" may be described as follows:

$$\widetilde{R}_{it} = (\widetilde{P}_{it} - P_{i,t-1} + \widetilde{D}_{it})/P_{i,t-1}$$
$$= (\widetilde{P}_{it} - P_{i,t-1})/P_{i,t-1} + \widetilde{D}_{it}/P_{i,t-1}$$

where, respective terms are designated as follows:

$\widetilde{R}_{it}$: the rate of return for the securities "i" in the period "t" (random variable);
$\widetilde{P}_{it}$ : the price of the securities i in the period t (random variable);
$P_{i,t-1}$: the price of the securities i in the period t-1 (known);
$\widetilde{D}_{it}$ : the dividend of the securities i in the period t (random variable); and
~: the random variable.

Herein, assuming that a unit of certain securities i would be in conformity with a certain probability distribution and a probability that a certain event "j" may occur is denoted by $P_j$, the expected rate of return $\overline{R}_i$ and the variance $\sigma_i^2$ are described as follows:

$$\overline{R}_i = \sum_{j=1}^{M} \widetilde{P}_j \widetilde{R}_{ij}$$

$$\sigma_i^2 = \sum_{j=1}^{M} \widetilde{P}_j (\widetilde{R}_{ij} - \overline{R}_{ij})^2$$

where, the respective terms are designated as follows:

$\widetilde{P}_j$: the probability that the event "j" may occur;
$\widetilde{R}_{ij}$: the rate of return of the asset "i" in the event j;
$M$: the number of possible events.

For the advertisement product, assuming, for example, that the audience rating of a certain program of the TV advertisement, $R_i$, is represented by a random variable associated with a certain probability distribution, an expected value and a variance in the audience rating $R_i$ can be expressed by the similar expressions as those written above. Herein, for the case of the advertisement products, the following expression may be established in the relationship between the audience rating and the price;

$$CPM_{i,t} = P_{it} / (0.01 N \widetilde{R}_{it})$$

$$CPM_{i,t-1} = P_{i,t-1} / (0.01 N \widetilde{R}_{i,t-1})$$

(definitional expression of the CPM)

The CPM is in inverse proportion to the audience rating. Herein, introducing a variable representing a rate of change between the periods t-1 and t in the case of the audience rating increase:

$$r_{i,t} = (CPM_{i,t-1} - CPM_{i,t}) / CPM_{i,t-1},$$

and assuming the price of the advertisement product is the same in both periods t-1 and t, then:

$$\widetilde{r}_{i,t} = 100 \times \left[ (P_{i,t-1} / 0.01 N \widetilde{R}_{i,t-1}) - (P_{i,t} / 0.01 N \widetilde{R}_{i,t}) \right] / (P_{i,t-1} / 0.01 N \widetilde{R}_{i,t-1})$$

$$= 100 - \left[ 100 \times (P_{i,t} / \widetilde{R}_{i,t}) / (P_{i,t-1} / R_{i,t-1}) \right]$$

$$= 100 - (100 \times R_{i,t-1} / \widetilde{R}_{i,t})$$

$$= (\widetilde{R}_{i,t} - R_{i,t-1}) / 0.01 \widetilde{R}_{i,t}$$

$$\because P_{i,t} = P_{i,t-1}$$

where,

N: the number of families in a broadcasting area of the program "i" (by a unit of 1000-family);
$CPM_{i,t}$: the CPM of the program i in the period "t";
$CPM_{i,t-1}$: the CPM of the program i in the period "t-1";
$r_{i,t}$: the rate of change in the CPM of the program i in the period t (%);
$\widetilde{R}_{i,t}$: the audience rating of the program i in the period "t" (random variable);
$R_{i,t-1}$: the audience rating of the program i in the period "t-1" (known);
$P_{i,t}$: the price of the program i in the period "t"; and
$P_{i,t-1}$: the price of the program i in the period "t-1".

If the described $\widetilde{r}_{i,t}$ is used to express an expected rate of change and variance for the advertisement product, since the $\widetilde{r}_{i,t}$ should be a function of the $\widetilde{R}_{i,t}$, there will be derived such equations as:

$$\overline{R}_i = \sum_{j=1}^{M} \widetilde{P}_{ij} \widetilde{r}_{ij}$$

$$= \sum_{j=1}^{M} \widetilde{P}_{ij} \left[ (\widetilde{R}_{i,t} - R_{i,t-1})/0.01\widetilde{R}_{i,t} \right]$$

$$\sigma_i^2 = \sum_{j=1}^{M} \widetilde{P}_{ij} (\widetilde{r}_{ij} - \overline{r}_{ij})^2$$

$$= \sum_{j=1}^{M} \widetilde{P}_{ij} \left[ (\widetilde{R}_{i,t} - R_{i,t-1})/0.01\widetilde{R}_{i,t} - (\overline{R}_{i,t} - R_{i,t-1})/0.01\widetilde{R}_{i,t} \right]$$

$$= \sum_{j=1}^{M} \widetilde{P}_{ij} \left[ (\widetilde{R}_{i,t} - \overline{R}_{i,t})/0.01\widetilde{R}_{i,t} \right]^2$$

where,

$\widetilde{P}_{ij}$ : the probability that the event "j" may occur, and
M: the number of possible events.

Taking advantage of the above relationship, the concept of the expected rate of return and variance used in analyzing the financial products can be applied to the analysis of the advertisement products.

The "advertisement portfolio" having been referred to as above will now be explained in supplementary.

In the field of financial business, "a portfolio" generally means " a composition of financial assets owned by a bank, a corporation and so on" and it means particularly in the field of security business "a combination of various securities", but on the purpose of the present invention, "an advertisement portfolio" is defined as "a combination of various kinds of advertisement products owned by a sponsor". That is, in the market where n kinds of advertisement products, $S_j$ (j = 1, ..., n) are being dealt with, a total amount of purchasing in the case where the sponsor has bought the advertisement product $S_j$ by unit of $y_j$ may be expressed by $\Sigma P_j y_j$ (j = 1, ..., n), where $P_j$ represents an advertising fee of the advertisement product $S_j$ per $y_j$ unit. In this case, a vector $y = (y_1, ..., y_n)$ is referred to as the "advertisement portfolio" owned by the sponsor. Said advertisement portfolio should be specifically referred to as "a program advertisement portfolio" for the advertisement product $S_j$ limited to an advertisement on a television program, and similarly it should be referred to as "a newspaper advertisement portfolio" for the $S_j$ limited to the newspaper advertisement.

Herein, to calculate the AR index for overall advertisement portfolio $y = (y_1, ..., Y_n)$ in the case where the sponsor has bought the advertisement product $S_j$ by the $y_j$ unit, by using the standard deviation of the audience rating for the advertisement product (program) $S_j$ denoted as $\sigma_j$ and the cumulative distribution function with respect to the random variable x (=audience rating) according to the normal distribution denoted as N(x), the averaged audience rating for the overall advertisement portfolio, $\overline{R}_p$, may be expressed as:

$$\overline{R}_p = \sum_{j=1}^{n} y_j \overline{R}_j \qquad (j = 1, ..., n) \qquad (*)$$

and, the variance $\sigma_p$ for overall advertisement portfolio may be expressed as:

$$\sigma_p = \sum_{j=1}^{n} \sum_{k=1}^{n} y_j y_k \sigma_{jk} \qquad (j, k = 1, ..., n) \qquad (**)$$

(Where, the $\sigma_{jk}$ is a covariance of the advertisement product j and the advertisement product k.)

Now, the aforementioned "comprehensive advertisement risk management index" will be described.

The comprehensive advertisement risk management index is used to describe, by using an mathematical model, how the statistical data of individual advertisement media obtained from a variety of sample surveys such as an audience rating or a subscription rating of a certain advertisement product varies during period equivalent to the period of the purchasing of the advertisement product, and herein, in specific, the "comprehensive advertisement risk management index" AR (the AR index) is used to refer a maximum loss amount of the CPM under the condition of a certain confidence interval possibly caused by the advertisement product being exhibited below an expected certain value (an expected audience rating in case of the advertisement on television).

How to calculate the AR index particularly for the television advertisement will now be described in supplementary. Herein, it is assumed that the audience rating $\bar{R}$ of a program subject to purchase in a certain period is represented by a random variable according to a certain probability distribution. Then, assuming the confidence interval being a%, in the case where a mean value for a population (a population average) is estimated from a sample, if the population is in the normal distribution with a standard deviation σ and a mean value for n of the samples extracted from this population is denoted by $\bar{X}$, then generally it is estimated that the mean value "m" of this population may fall; at the probability (reliability) of 95% in a range (confidence interval) of:

$$\bar{X} - 1.96(\sigma/\sqrt{n}) < m < \bar{X} + 1.96(\sigma/\sqrt{n}) \tag{A}$$

and, at the probability (reliability) of 99% in a confidence interval of:

$$\bar{X} - 2.58(\sigma/\sqrt{n}) < m < \bar{X} + 2.58(\sigma-/\sqrt{n}) \tag{B}$$

Then, the derivations of (A) and (B) will now be described.

If a probability distribution function of the standard normal distribution is expressed by $\Phi(z) = (1/\sqrt{2\pi})\exp(-z^2/2)$, then from a mathematical table (see, for example, "Black-Scholes differential equation for financial and securities" written jointly by Sadao Ishimura and Sonoko Ishimura, Tokyo Shoseki Co., Ltd, 1999, pp.58-63), there will be derived such equations as:

$$\int_{-1.96}^{1.96} \Phi(z)dz = 2 \times 0.475 = 0.95$$

and, similarly,

$$\int_{-2.58}^{2.58} \Phi(z)dz = 2 \times 0.4951 = 0.9902$$

Further, when the mean value and the standard deviation of the sample in the volume of n extracted from the population in the volume of N (not necessarily be in the normal distribution) are expressed by $\bar{X}$ and σ respectively, and in addition the N is large enough in comparison with the n wherein the n is large, according to the "central limit theorem", then the mean value m of the population may be estimated by using above-described (A) and (B).

Herein, aforementioned "central limit theorem" will be described.

The "central limit theorem" expresses the fact that when an arbitrary sample with a volume of n is extracted from a population having the standard deviation of σ, a distribution of the sample mean value $\bar{X}$ approaches to the normal distribution N $(m, (\sigma/\sqrt{n})^2)$, as the n becomes greater.

As described above, assuming that the audience rating $\bar{R}$ for the program subject to purchase in a certain period is a random variable and the confidence interval is α%, then, a minimum audience rating Rα that may possibly occur under that probability may be expressed as follows:

$$R\alpha = \left\{ RL \middle| \mathrm{Pr}ob(\bar{R} > RL) = \alpha \right\}$$

With the expected audience rating specified as R and the advertising cost as W, the comprehensive advertisement risk management index AR under the condition of the confidence interval of α % can be defined as follows.

Wherein, the mean value in the expected audience rating is denoted as $\bar{R}$.

$$AR = (W/R\alpha) - (W/\bar{R})$$
$$= (W/\bar{R}) \times \{(\bar{R}/R\alpha) - 1\}$$

Since the CPM calculated with the averaged audience rating can be expressed as $W/\bar{R}$, therefore

$$AR = CPM \times \{(\bar{R}/R\alpha) - 1\}$$

To calculate the audience rating R $\alpha$ in the confidence interval $\alpha$ %, the following three methods are available;

(1) Variance/covariance method
  The normal distribution is assumed for the probability distribution, in which the variance-covariance matrix of the audience rating is calculated first, and then the audience rating R $\alpha$ in the confidence interval $\alpha$ % is calculated;
(2) Historical simulation method
  This method uses previous audience rating data as an expected future scenario, in which the audience rating R$\alpha$ is calculated under an assumption that the past audience rating is occurring currently; and
(3) Monte Carlo simulation method
  This method does not need any previous audience rating data as an expected future scenario but the future audience rating scenario may be generated by way of the Monte Carlo simulation by using some kind of audience rating estimation model so as to calculate the audience rating R $\alpha$.

The calculation by using the (1) variance/covariance method, which is the simplest among above three methods, will now be explained.

Herein, it is to be assumed that the standard deviation of the audience rating for a certain program is $\sigma$ and the cumulative distribution function with respect to a random variable x associated with the normal distribution is N(x).

In this case, the audience rating R $\alpha$ may be determined as described below:

$$R\alpha = \bar{R} - N^{-1}(1-\alpha)\sigma$$

Accordingly, the comprehensive advertisement risk management index AR may be calculated as follow:

$$AR = CPM \times \langle [\bar{R}/\{\bar{R} - N^{-1}(1-\alpha)\sigma\}] - 1 \rangle$$
$$= CPM \times \{N^{-1}(1-\alpha)/\{(\bar{R}/\sigma) - N^{-1}(1-\alpha)\}$$

For example, it is to be assumed that the average and the standard deviation of the audience rating for the program subject to purchase in a certain period are 20% and 2%, respectively. In this case, if the CPM of the program subject to purchase is assumed to be 1,000yen, then the comprehensive advertisement risk management index AR in the confidence interval (the probability of being not smaller than the value determined by subtracting the doubled standard deviation from the average) of 97.7% may be determined in the following manner.

The standard normal distribution is a normal distribution N (0, $1^2$) having the mean value of 0 and the standard deviation of 1, according to its definition. It is to be assumed that the variance $\sigma^2$ of the population in the standard normal distribution ($\sigma$: standard deviation = -1.00, +1.00) should take a value of 1.00. Then, in order to determine a probability that a certain sample is existing within a range of z = -1.00 $\sim$ +1.00 around a center equivalent to the average of the population, the standard normal probability distribution function $\Phi$ (z) is integrated over the range of z = -1.00 $\sim$ +1.00, and its area (= probability) should be 0.682. That is, if a population is associated with the standard normal distribution, a certain sample extracted from the population is estimated to fall within the range of the $\pm$ 1 standard deviation at the probability of 0.682.

From the above description, by taking advantage of such a nature pertained to the standard normal distribution that when the standard normal probability distribution function $\Phi(z)$ is integrated over the range of z = -2.00 $\sim \infty$, the probability is just 0.977, it can be derived that if the audience rating for a certain program is associated with the normal distribution, in order to obtain the program audience rating $R\alpha$ exceeding the target minimum audience rating $R_L$ (a value of $\Phi(x)$ where x = -2 $\sigma$) in the confidence interval of 97.7%, a range of the x should be not smaller than the doubled standard deviation (-2 $\sigma \sim \infty$).

An important point in this regard is that the probability of the program audience rating $R\alpha$ falling in a range below the target minimum audience rating $R_L$ should be used as a reference in the risk evaluation (use of the safety first reference). That is, the probability of the program audience rating $R\alpha$ falling in the range below the target minimum audience rating $R_L$ is equal to 1-0.997, wherein the range of x = -$\infty$ $\sim$ -2.00 should be integrated.

If it is desired that the audience rating for a certain program in the normal distribution with the averaged audience rating of 20% and the standard deviation of 2% falls in the range not lower than the target minimum audience rating $R_L$ at the probability of 97.7% and also takes the program audience rating $R\alpha$, then the x = $R\alpha$ should be solved for the case of z = -2.

To convert the normal distribution $N(m, \sigma^2)$ into the standard normal distribution $N(0, 1^2)$, the equation z = (x-m)/$\sigma$ may be used. Since in this example z=-2, therefore;

$$-2 = (x-m)/\sigma$$

$$\therefore x=m-2\sigma$$

Further, since m = 20 and $\sigma$ = 2, therefore x = $R\alpha$ = 16%, and according to the definition of the AR index:

$$AR = CPM \times \left\langle \left[ \overline{R} / \left\{ \overline{R} - N^{-1}(1-\alpha)\sigma \right\} \right] - 1 \right\rangle$$
$$= CPM \times \left\{ N^{-1}(1-\alpha) \right\} / \left\{ (\overline{R}/\sigma) - N^{-1}(1-\alpha) \right\}$$

the loss amount in the case of the audience rating reaching to 16% is calculated as follows:

$$AR = 1{,}000 \text{yen} \times 2/\{(20/2)\text{-}2\} = 250 \text{yen}.$$

Accordingly, it may be said that the maximum unexpected loss amount in the CPM, which may possibly be incurred by this advertisement product having the rate of return below the expected value under the condition of the probability of 97.7%, should be 250yen. (Under the condition of the confidence interval of 97.7%, there is a possibility that the audience rating is 16%, and in that case, the CPM should be calculated to 1,250yen.

In the actual trading, since the prediction of the future audience rating is impossible, therefore an averaged audience rating over a certain period is assumed as an actual audience rating to be used as trading data, but if there is any method that can calculate virtually a risk occurring from the variation in the previous audience rating and can generate such a selection pattern of the advertisement product that can minimize said risk, the method may help reduce the risk of the sponsor with respect to the audience rating variation.

Now, the relationship between said "advertisement portfolio" and said "comprehensive advertisement risk management index" will be described.

The relationship between the advertisement portfolio and the comprehensive advertisement risk management index will be explained by way of a specified example where a sponsor is going to offer an advertisement in a program on television.

The probability in the daily weather is 1/3 for sunny, cloudy and rainy, respectively. From the statistical data for the past, it is observed that the audience rating of the program A may be 6% for sunny, 10% for cloudy and 20% for rainy weather. The program B is a live broadcast of a night game, in which it has been found from the similar statistical data for the past that the program B may achieve the audience rating of 9% for sunny weather, and the night game live broadcasting should be cancelled in case of rain and substituted with a rerun program, which may achieve the audience rating of 5%.

Then, consider that under the condition described above, which program the sponsor should buy in what manner. It is to be appreciated that the CPM calculated from the offer price of the program should have been determined for each of the programs.

Table 1

| Program | Sunny | Cloudy | Rainy | Average | Standard deviation | CPM(¥) |
|---|---|---|---|---|---|---|
| A(13:00~) | 6 | 10 | 20 | 12 | 5.89 | 660 |
| B(18:00~) | 9 | 7 | 5 | 7 | 1.63 | 600 |
| C(23:00~) | 6 | 7 | 8 | 7 | 0.82 | 630 |
| Probability | 1/3 | 1/3 | 1/3 | | | |

In the case represented in Table 1, based on the comparison between the program A and the program B, it can be said that the program A is more favorable from the viewpoint of the averaged audience rating but the program B is more favorable from the viewpoint of the standard deviation, which means it is difficult to determine which program should be preferable.

On the other hand, based on the comparison between the program B and the program C, it may be said that the program C having the same in the averaged audience rating but the half in the standard deviation is more preferable.

Table 2

| Program Portfolio | Sunny | Cloudy | Rainy | Average | Standard deviation | AverageCPM(¥) |
|---|---|---|---|---|---|---|
| C=1.0C | 6 | 7 | 8 | 7 | 0.82 | 630 |
| D=0.2A+0.8B | 8.4 | 7.6 | 8 | 8 | 0.33 | 618 |

However, when the program portfolios of the advertisement products are generated as such represented in Table 2, the program portfolio D having the combination of the offers by 20% for the program A and 80% for the program B may achieve the higher averaged audience rating and smaller standard deviation as compared with the program portfolio C having the offer totally directed to the single program C. Further, the CPM of the program portfolio D may be cheaper than that of the program portfolio C. In this regard, it should be noted that the calculation of the CPM of the program portfolio is not simply a weighed averaging of each program. For example, the CPM of the program portfolio D may be calculated in the following manner.

At first, it is assumed that the advertising fee for the program "i" (per 1000 people) is denoted as $W_i$ and the averaged audience rating as $\bar{R}_i$. Secondarily, assuming that the CPMs of the program A and the program B are denoted by $CPM_A$ and $CPM_B$, respectively, then;

$$CPM_A = W_A / \bar{R}_A$$

$$CPM_B = W_B / \bar{R}_B$$

Herein, assuming that the ratios of offer to the program A and the program B are denoted by $X_A$ and $X_B$, respectively, the advertising fee $W_D$ of the program portfolio D is written as:

$$W_D = X_A W_A + X_B W_B = X_A \bar{R}_A CPM_A + X_B \bar{R}_B CPM_B$$

and, accordingly the CPM of the program portfolio D may be calculated as:

$$CPM_D = W_D / R_D$$
$$= \{X_A \bar{R}_A CPM_A + X_B \bar{R}_B CPM_B\} / \{X_A \bar{R}_A + X_B \bar{R}_B\}$$
$$= [X_A \bar{R}_A / \{X_A \bar{R}_A + X_B \bar{R}_B\}] CPM_A + [X_B \bar{R}_B / \{X_A \bar{R}_A + X_B \bar{R}_B\}] CPM_B$$

If this calculation is applied to the sample of Table 2, then

$$CPM_D = \{(0.2 \times 12)/8\} \times 660 + 0.8 \times 7)/8\} \times 600 = 618$$

Generally, if the number of programs constituting the program portfolio is N, the CPM of the program portfolio P may be calculated in the following manner.

$$CPM_p = \sum \{(X_i \overline{R_i})/R_p\} CPM_i$$

where, $R_p = \Sigma X_i R_i$.

Although the above example has described illustratively a study in which only the relationship between the audience rating and the cost has been taken as the criterion, upon buying a program in practice, there must be such a case where the condition for selecting the adverting media is taken into account to make a decision on the purchase so that those factors including whether or not the contents of the program match with the enterprise activity or image can be reflected on the condition for the selection.

In that case, since there must be a need for a mechanism in which, in addition to the above-described relation between the audience rating and the cost, a factor relating to a qualitative effect of the advertising media should be taken into account on the system, the program evaluation data must be inputted as an essential factor, which will be described later.

Now, the subject that in the case where 3 units of regular programs are going to be provided for half a year, which kind of advertisement portfolio or which kind of combination of the programs is desirable will be examined by using the comprehensive advertisement risk management index AR (hereafter, referred to as the AR index, if appropriate).

Herein, it is to be assumed that there are 3 units of regular programs A, B and C, and the audience rating for each of them is in the normal distribution. When the averaged audience rating, the standard deviation of the audience rating and the CPM for recent 6 months are specified as shown in Table 3, then it will be examined that which program the sponsor should buy in order to minimize the risk.

Table 3

| Program name | Averaged audience rating | Standard deviation | CPM (¥) | AR index (¥) |
|---|---|---|---|---|
| A | 12 | 5.88 | 660 | 34646.9 |
| B | 7 | 1.63 | 600 | 524.8 |
| C | 7 | 0.82 | 630 | 191.7 |

In this case, according to the AR index, preferably the program C should be offered. However, if the advertising budget is abundant to buy a plurality of programs in combination, then with reference to the preceding study, there may be made a comparison between the AR index for the program portfolio C in which the single program C is offered for 2 minutes and 30 seconds (even a case of single program can be considered as a program portfolio), and the AR index for the program portfolio D including the combination of the programs A and B (the portfolio in which the program A is offered for 30 seconds and the program B for 2 minutes), as shown in Table 4.

Table 4

| Program portfolio name | Averaged audience rating | Standard deviation | Average CPM (¥) | AR index (¥) |
|---|---|---|---|---|
| Program portfolio C | 7 | 0.82 | 630 | 191.7 |
| Program portfolio D | 8 | 0.33 | 618 | 54.9 |

As is obvious from Table 4, the purchase of the portfolio D including the combination of the programs can decrease the AR index rather than offering the programs A, B and C respectively as a single unit.

From the above study, it has been found that if by way of forming a program portfolio (the advertisement portfolio) consisting of a combination of some programs, a risk amount for the entire program portfolio occurring from a variation in the averaged audience rating could be calculated based on the indexes including the averaged audience rating, the standard deviation and the CPM of said program portfolio, and thereby a selection pattern of the advertisement product that can minimize said risk amount could be generated, then the risk of the sponsor in association with the audience rating variation could be further reduced rather than the case where a decision on the purchase of the individual program is made based on the indexes such as the averaged audience rating, the standard deviation and the CPM for each individual program. Further, the introduction of the AR index as described above makes it possible that the absolute risk amount in the purchase unit of the advertisement product and the advertising fee that may occur upon buying a combination of the advertisement products both on television and newspaper can be converted to the relative risk amount, and thereby all of the generated advertisement portfolios can be comparatively evaluated according to the integrated index, the AR index.

To generate an optimal operational plan of the advertisement cost in a comprehensive and reasonable manner by using the studies as explained above, it is required to establish a theory, as will be described below.

Then, "the comprehensive advertisement risk management index and the program portfolio model theory" according to the present invention will be described.

It is to be assumed that in the market trading n kinds of programs, $S_j$ (j=1, ..., n), the averaged audience rating in a certain audience attribute over a certain period is denoted by $\bar{R}_j$ and the standard deviation therein is denoted by $\sigma_j$. The total amount for the case where the sponsor has bought the program $S_j$ by unit of $y_j$ is expressed by $\Sigma P_j y_j$ (where, the $P_j$ represents the advertising fee of the advertisement product $S_j$ per $y_j$ unit).

In this expression, the vector:

$$y = (y_1, ..., y_n)$$

is referred to as "the program portfolio" owned by the sponsor.

Herein, the covariance of the audience rating of the program $S_j$ and the audience rating of the program $S_k$ is denoted by $\sigma_{jk}$, and the total budget amount spent by the sponsor is denoted by $W_L$ for the upper limit and $W_U$ for the lower limit.

Since the purchase of the program has to be handled by a certain integer unit, it is not always possible to buy the programs so as for the budget amount predetermined by the sponsor to coincide with the actual total amount spent for purchasing the programs, but the upper and lower limits of the total budget amount to be spent by the sponsor should be set such that some share in the budget predetermined by the sponsor can be allocated to the actual purchase of the programs. At that time, if the averaged audience rating $\bar{R}_P$ of the program portfolio is not less than a specified value, the issue in minimizing the variance of the averaged audience rating can be formulated as follows:

$$\text{minimize } \Sigma\Sigma\sigma_{jk}y_j y_k \tag{1}$$

$$\text{subject to } \Sigma\bar{R}_j y_j / \Sigma y_j \geqq RE \tag{2}$$

$$W_L \leqq \Sigma P_j y_j \leqq W_U \tag{3}$$

$$y_j: \text{integer variable} \tag{4}$$

The formula (2) can be rewritten to a linear constraint formula such as: $\Sigma(\bar{R}_j - RE)y_j \geqq 0$. Further, since it is possible to describe as:

$$AR_p = CPM_p \times \left\{ (\bar{R}_p) / (\bar{R}_p N^{-1}(1-\alpha)\sigma_p) - 1 \right\}$$
$$= CPM_p \times N^{-1}(1-\alpha) / \left\{ (\bar{R}_p / \sigma_p) - N^{-1}(1-\alpha) \right\}$$

therefore it is to be understood that reducing the standard deviation $\sigma_p$ of the program portfolio is equivalent to reducing the AR index of the portfolio, $AR_p$.

The present invention has been described in detail, and as noted in the description, according to the present invention, by simply setting those parameters to be considered as an input condition, the portfolio models of the advertisement products can be automatically generated, and by processing the product data for those advertisement products in a statistical manner, the AR index can be calculated for each of those portfolio models so as to provide the sponsor with the optimal selection of the portfolio model of the advertisement product. Further, applying those comprehensive advertisement risk management systems make it possible to quantify the advertisement trading risk not only for the advertisement portfolios but also for the individual advertisement product and thus to provide such an advertisement derivative product model that can reduce the quantified risk.

Further, the present invention allows the user to make a simulative calculation on a large variety of methods so as to grasp the feature or the trend in each of the methods, so that the present invention can provide a flexible response to a change in the models associated with the environmental change in the market after the system for calculating the AR index having started its operation.

POSSIBILITY OF THE INDUSTRIAL APPLICATION

Since in an advertisement portfolio model according to the present invention, firstly a relational expression to determine a comprehensive advertisement risk management index is derived, which is an index for statistically representing a maximum unexpected loss amount which the advertisement product may be subject to at a certain probability during the advertising campaign period, secondarily a plurality of correlation coefficient data of the advertisement product is calculated from observational data of the advertisement product, and thirdly an optimal combination of the advertisement products is figured out in order to analyze at least either one of an effect, an efficiency or a risk of the advertisement product based on the relational expression for determining the comprehensive advertisement risk management index and the plurality of correlation coefficient data or the observational data which has taken the correlation into account indirectly, therefore the optimal combination of the advertisement products can be provided for the sponsor.

Since a comprehensive advertisement risk management system taking advantage of the advertisement portfolio model according to the present invention is the comprehensive advertisement risk management system using the optimal advertisement portfolio model to analyze at least either one of the effect, the efficiency or the risk of the advertisement product, and said system comprises: an input means for entering a setting condition required to calculate the comprehensive advertisement risk management index; a model generation means for generating a plurality of advertisement portfolio models by firstly calculating a plurality of numeric values relating to the advertising effect and the advertising efficiency from the observational data in the past according to the setting condition entered by the input means, and by secondarily calculating a plurality of correlation coefficient data for the advertisement product from the purchased advertisement product data; a verification means for comparing the plurality of those generated advertisement portfolio models to actual data during a period of said advertisement product being offered and for verifying that said plurality of advertisement portfolio models is adaptable to the real condition; and a selection means for selecting a most suitable advertisement portfolio model with respect to the risk analysis and the effect analysis of the advertisement product from said plurality of advertisement portfolio models based on the verification result by said verification means, therefore the present invention can provide such a system that allows the user to make a comprehensive decision on the investment to the combination of the advertisement products.

Since an investment decision method using the advertisement portfolio model according to the present invention comprises the steps of: entering a setting condition required to calculate the comprehensive advertisement risk management index; calculating a plurality of numeric values relating to the advertising effect and the advertising efficiency from the observational data in the past according to the setting condition entered by the input means; calculating a plurality of correlation coefficient data for the advertisement product from the advertisement product data for the purchased advertisement product; generating a plurality of advertisement portfolio models based on the calculation results; comparing a plurality of those generated advertisement portfolio models to actual data during a period of the purchased advertisement product being offered; verifying that said plurality of advertisement portfolio models is adaptable to the real condition based on the comparison result; and selecting a most suitable advertisement portfolio model with respect to the risk analysis and the effect analysis of the purchased advertisement product from the plurality of advertisement portfolio models based on said verification result, therefore the present invention allows the sponsor to make a comprehensive decision on the investment to the combination of the advertisement products.

**Claims**

1. An advertisement portfolio model, in which firstly a relational expression to determine a comprehensive advertisement risk management index is derived, which is an index for statistically representing a maximum unexpected loss amount which an advertisement product is subject to at a certain probability during an advertising campaign period, secondarily a plurality of correlation coefficient data of said advertisement product are calculated from an observational data of said advertisement product, and thirdly an optimal combination of said advertisement products is figured out in order to analyze at least either one of an effect, an efficiency or a risk of said advertisement product based on said relational expression for determining said comprehensive advertisement risk management index and said plurality of correlation coefficient data or the observational data which has taken the correlation into account indirectly.

2. An advertisement portfolio model in accordance with claim 1, in which said advertisement product comprises at least two or more different advertisement products.

3. An advertisement portfolio model in accordance with claim 1 or 2, in which said advertisement product includes at least one advertisement derivative product.

4. An advertisement portfolio model in accordance with claim 3, in which said advertisement derivative product is constructed so as to measure a risk in an individual advertisement transaction and at the same time, to reduce the risk in the individual advertisement transaction.

5. A comprehensive advertisement risk management system using an optimal advertisement portfolio model to analyze at least either one of an effect, an efficiency or a risk of an advertisement product, said system comprising:

an input means for entering a setting condition required to calculate a comprehensive advertisement risk management index;
a model generation means for generating a plurality of advertisement portfolio models by firstly calculating a plurality of numeric values relating to an advertising effect and an advertising efficiency from an observational data in the past according to said setting condition entered by said input means, and by secondly calculating a plurality of correlation coefficient data for a purchased advertisement product from an advertisement product data of said purchased advertisement product;
a verification means for comparing said plurality of those generated advertisement portfolio models to actual data during a period of said advertisement product being offered and for verifying that said plurality of advertisement portfolio models is adaptable to the real condition; and
a selection means for selecting a most suitable advertisement portfolio model with respect to a risk analysis and an effect analysis of said purchased advertisement product from said plurality of advertisement portfolio models based on a verification result by said verification means.

6. A comprehensive advertisement risk management system using an advertisement portfolio model in accordance with claim 5, in which said advertisement product comprises at least two or more different advertisement products.

7. A comprehensive advertisement risk management system using an advertisement portfolio model in accordance with claim 5 or 6, in which said advertisement product includes at least one advertisement derivative product.

8. A comprehensive advertisement risk management system using an advertisement portfolio model in accordance with claim 7, in which said advertisement derivative product is constructed so as to measure a risk in an individual advertisement transaction and at the same time, to reduce the risk in said individual advertisement transaction.

9. A comprehensive advertisement risk management system using an advertisement portfolio model in accordance with either of claim 5 to 8, in which a plurality of numeric values relating to said advertising effect and said advertising efficiency is represented by two or more values selected from a group consisting of values relating to an audience rating, a cost per mil (CPM), a reach, a frequency and a recognition.

10. An investment decision making method using an advertisement portfolio model, comprising the steps of:

entering a setting condition required to calculate a comprehensive advertisement risk management index;
calculating a plurality of numeric values relating to an advertising effect and an advertising efficiency from an observational data in the past according to said setting condition entered by said input means;
calculating a plurality of correlation coefficient data for a purchased advertisement product from an advertisement product data of said purchased advertisement product;
generating a plurality of advertisement portfolio models based on the calculation results;
comparing a plurality of those generated advertisement portfolio models to actual data during a period of said purchased advertisement product being offered;
verifying that said plurality of advertisement portfolio models is adaptable to a real condition based on the comparison result; and
selecting a most suitable advertisement portfolio model with respect to a risk analysis and an effect analysis of said purchased advertisement product from said plurality of advertisement portfolio models based on said verification result.

11. An investment decision making method using an advertisement portfolio model in accordance with claim 10, in which said advertisement product comprises at least two or more different advertisement products.

12. An investment decision making method using an advertisement portfolio model in accordance with claim 10 or 11, in which said advertisement product includes at least one advertisement derivative product.

13. An investment decision making method using an advertisement portfolio model in accordance with claim 12, in which said advertisement derivative product is constructed so as to measure a risk in an individual advertisement transaction and at the same time, to reduce the risk in said individual advertisement transaction.

14. An investment decision making method using an advertisement portfolio model in accordance with either of claim 10 to 13, in which a plurality of numeric values relating to said advertising effect and said advertising efficiency is represented by two or more values selected from a group consisting of values relating to an audience rating, a cost per mil (CPM), a reach, a frequency and a recognition.

# FIG. 1

User purchasing condition input section — 10

Advertisement product data storage section — 20

User setting condition input section — 60

Program combination processing section — 30

Market data storage section — 40

AR index calculation processing section — 70

Owned advertisement product data storage section — 50

AR index data storage section — 80

Actual loss and gain data storage section — 90

Comparative verification processing section — 100

Verification result data storage section — 110

# FIG. 2

| Portfolio model | | ① | ② | ③ | · · · | Actual loss and gain |
|---|---|---|---|---|---|---|
| | AR index calculation start date | Apr./5/1998 | Apr./5/1998 | Apr./5/1998 | · · · | · · · |
| | AR index calculation end date | Sep./25/1998 | Sep./25/1998 | Sep./25/1998 | · · · | · · · |
| Condition input | Observation start date | Apr./5/1997 | Apr./5/1997 | Apr./5/1997 | · · · | · · · |
| | Observation end date | Sep./25/1998 | Sep./25/1998 | Sep./25/1998 | · · · | · · · |
| | Complementing method | Linear | Spline | Linear | · · · | · · · |
| | Peculiar value elimination | Without | Without | Without | · · · | · · · |
| | Volatility calculation method | Daily | Daily | Daily | · · · | · · · |
| | Sensitivity measurement method | + | + | + | · · · | · · · |
| AR index value | Apr./5/1998 | 528,950 | 589,650 | 589,623 | · · · | 598,652 |
| | Apr./6/1998 | 698,520 | 785,230 | 586,230 | · · · | 685,200 |
| | Apr./7/1998 | 285,920 | 256,230 | 589,620 | · · · | 356,320 |
| | · · · | · · · | · · · | · · · | · · · | · · · |
| | · · · | · · · | · · · | · · · | · · · | · · · |
| | Sep./24/1998 | 256,320 | 421,020 | 236,020 | · · · | 265,320 |
| | Sep./25/1998 | 523,200 | 263,200 | 236,950 | · · · | 352,620 |
| Number of measured days | | 174 | 174 | 174 | · · · | — |
| Number of AR index excess times | | 3 | 6 | 1 | · · · | — |
| Optimal model ranking | | 2 | 9 | 1 | · · · | — |

EP 1 244 036 A1

# FIG. 3(a)

Start

Input user purchasing conditon —S1

Store advertisement product data —S2

Generate advertisement portfolio —S3

Store market data —S4

Store owned advertisement product data —S5

Input user setting condition —S6

To be continued to Fig.3(b)

# FIG. 3(b)

From Fig.3(a)

S7

Condition input?
If no, apply default

S8

Input market data, owned
advertisement product data and
user setting condition input
data, respectively

S9

Calculate AR index data

S10

Store AR index data

S11

Calculate actual loss and
gain data

S12

Store actual loss and gain data

To be continued to Fig.3(c)

# FIG. 3(c)

From Fig.3(b)

Input actual loss and gain data and AR index data ⟋S13

Comparatively verify entered data by using relationship between AR index and advertisement portfolio theory ⟋S14

Measure the number of times of value of actual loss and gain exceeding all of the value of AR index data, based on comparative verification result ⟋S15

Out put and indicate measured result as verification result data ⟋S16

Store verification result data ⟋S17

End

# FIG. 4(a)

## User purchasing condition input

Advertisement budget

| 1.75 | billion yen

Period of purchase

| 2001 | year | 10 | month | 05 | day ~

| 2002 | year | 03 | month | 25 | day

Area specification

| Kanto | block | Kansai | block | Chubu | block · · ·

Broadcasting hour specification

| 09:00 | ~ | 23:30 | excluding | 16:00 | ~ | 17:30 |

Time rank specification s/h

| 20.00% | 25.00% | 25.00% | 30.00% | 100.0% |

Program genre specification

| Drama | and | Sport | and | News | · · ·

Excluded genre specification

| Anime | and | | and | | · · ·

Program partition specification

| 3 | Belt Program : 1  Teleco program : 2  Box program : 3  beat? : 4
Informercial : 5  mail-order : 6

CPM limit etc.

| 750 | yen or under | And/Or | Multiplying rate | 25.00% | or under | And/Or | · · ·

Family audience rating limit

| 10.5 | % or up

Individual audience rating limit

Desgigneted hierarchy | F1/M1 |  Hierarchical individual audience rating | 8.0 | % or up

Target total GRP

| 20000 | % or up

CM material type

| 15 | seconds | 4 | type | 30 | seconds | 4 | type · · ·

Contracted personality

| Ryoko Fujiwara | | | | |

# FIG. 4 (b)

Program criteria    Evaluation by
                    5-level

| 5 | 4 | 3 | 2 | 1 |
|---|---|---|---|---|
|   |   |   |   |   |

Or Y/N

| Y | N |
|---|---|
|   |   |

### 1. Terms relating to the program genre

①Program having a social meaning such as
an environmental issue, cultural assets and
so on

| | * | | | |
|---|---|---|---|---|

②Educationally favorable program

| | * | | | |
|---|---|---|---|---|

③Program that helps deepen one's knowledge
and education

| * | | | | |
|---|---|---|---|---|

④Program with a high topicality

. . . . . . . . . . . . . . . . . . . . . . . . . . . .

### 2. Terms relating to the advertising strategy

①Program in conformity with the corporate philosophy
②Program in conformity with the product
③Program in conformity with the CM material
④Program having been bought by the firm of business
connection

. . . . . . . . . . . . . . . . . . . . . . . . . . .

### 3. Remarks

①Program that has been watched frequently
②Program that obtained a good reputation in the past
③Program that the sponsor intends to buy

. . . . . . . . . . . . . . . . . . . . . . . . . .

# FIG. 4 (c)

Terms for rejection

①Program directed to political/religious issue
②Program that had induced a social problem in the past
③Program that has a negative effect on bringing up the young
④Program directed to a socially highly controversial issue
. . . . . . . . . . . . . . . . . . . . . . . . .

# FIG. 5

User setting condition input

Period subject to AR index calculation

| 1998 |year| 04 |month| 05 |day| ~ |
| 1998 |year| 09 |month| 25 |day| |

Data observation period

| 1997 |year| 04 |month| 05 |day| ~ |
| 1998 |year| 09 |month| 25 |day| |

Data complementing method — Linear

With or without peculiar value elimination — Without

Volatility correlation coefficient calculation method — Daily

Sensitivity measuring method — +

# FIG. 6

Ten thousand yen

## FIG. 7

| | AR index calculation start date | AR index calculation end date | Observation start date | Observation end date | Complementing method | Outlier value elimination | Volatility calculation method | Sensitivity measuring method |
|---|---|---|---|---|---|---|---|---|
| 1 | Apr./5/1998 | Sep./25/1998 | Apr./5/1997 | Sep./25/1998 | Linear | Without | Daily | + |
| 2 | Apr./5/1998 | Sep./25/1998 | Apr./5/1997 | Sep./25/1998 | Spline | Without | Daily | + |
| 3 | Apr./5/1998 | Sep./25/1998 | Apr./5/1997 | Sep./25/1998 | Linear | With | For ten days | − |
| 4 | ... | ... | ... | ... | ... | ... | ... | ... |
| | ... | ... | ... | ... | ... | ... | ... | ... |
| | | | | | | | | ... |

EP 1 244 036 A1

## INTERNATIONAL SEARCH REPORT

| | International application No. |
|---|---|
| | PCT/JP00/09280 |

**A. CLASSIFICATION OF SUBJECT MATTER**
Int.Cl⁷ G06F17/60

According to International Patent Classification (IPC) or to both national classification and IPC

**B. FIELDS SEARCHED**

Minimum documentation searched (classification system followed by classification symbols)
Int.Cl⁷ G06F17/60

Documentation searched other than minimum documentation to the extent that such documents are included in the fields searched
Jitsuyo Shinan Koho        1922-1996    Toroku Jitsuyo Shinan Koho  1994-2001
Kokai Jitsuyo Shinan Koho  1971-2001    Jitsuyo Shinan Toroku Koho  1996-2001

Electronic data base consulted during the international search (name of data base and, where practicable, search terms used)
ABI/Inform(Dialog)

**C. DOCUMENTS CONSIDERED TO BE RELEVANT**

| Category* | Citation of document, with indication, where appropriate, of the relevant passages | Relevant to claim No. |
|---|---|---|
| A | Journal of Advertising Research, Vol.35, No.5, 1997, "Antecedents of risk-taking ehavior by advertisers: Empirical evidence and management implications", pp.27-40 | 5-9 |
| A | Journal of Advertising research, Vol.39, No.1, Jan/Feb 1999, West, D. C., "360 degrees of creative risk", pp.39-50 | 5-9 |

☐ Further documents are listed in the continuation of Box C.      ☐ See patent family annex.

| | |
|---|---|
| * Special categories of cited documents: <br> "A" document defining the general state of the art which is not considered to be of particular relevance <br> "E" earlier document but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search <br> 21 March, 2001 (21.03.01) | Date of mailing of the international search report <br> 10 April, 2001 (10.04.01) |
|---|---|
| Name and mailing address of the ISA/ <br> Japanese Patent Office | Authorized officer |
| Facsimile No. | Telephone No. |

Form PCT/ISA/210 (second sheet) (July 1992)

# INTERNATIONAL SEARCH REPORT

| International application No. |
|---|
| PCT/JP00/09280 |

**Box I  Observations where certain claims were found unsearchable (Continuation of item 1 of first sheet)**

This international search report has not been established in respect of certain claims under Article 17(2)(a) for the following reasons:

1. ☒ Claims Nos.: 1-4,10-14
   because they relate to subject matter not required to be searched by this Authority, namely:

   The inventions of claims 1-4 relate to an advertisement portfolio model and therefore to rules of doing business. The inventions of claims 10-14 relate to an investment judgment method and therefore to a method of doing business. Therefore the subject matters of the inventions are applied to PCT Rule 42.1(ii).

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box II  Observations where unity of invention is lacking (Continuation of item 2 of first sheet)**

This International Searching Authority found multiple inventions in this international application, as follows:

1. ☐ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**  ☐  The additional search fees were accompanied by the applicant's protest.

☐  No protest accompanied the payment of additional search fees.

Form PCT/ISA/210 (continuation of first sheet (1)) (July 1992)